# EUROPEAN PATENT APPLICATION

(11) **EP 4 502 191 A1**
(43) Date of publication of application: **05.02.2025**
(21) Application number: 23780630.2
(22) Date of filing: 28.03.2023
(51) Int. Cl.: C21D 8/12, C22C 38/00, C22C 38/06, C22C 38/60, H01F 1/147

(54) **NON-ORIENTED ELECTROMAGNETIC STEEL SHEET AND MOTOR CORE**

(30) Priority: 30.03.2022 JP 2022057541; 23.08.2022 JP 2022132805
(71) Applicant: NIPPON STEEL CORPORATION, Chiyoda-ku Tokyo 100-8071 (JP)
(72) Inventor: OTA, Shun, Tokyo 100-8071 (JP); TANAKA, Ichiro, Tokyo 100-8071 (JP)
(74) Representative: Vossius & Partner Patentanwälte Rechtsanwälte mbB
(86) International application number: PCT/JP2023/012705
(87) International publication number: WO 2023/190621

(57) **Abstract**

The present invention provides a non-oriented electrical steel sheet, having a chemical composition including, in terms of % by mass: 0.006% or less of C, from 1.0% to 5.0% of Si, less than 2.5% of sol. Al, 3.0% or less of Mn, 0.30% or less of P, 0.010% or less of S, 0.010% or less of N, 0.10% or less of O, other optional elements, and the balance of Fe and impurities, in which the non-oriented electrical steel sheet has an average crystal grain size of from 30 µm to 200 µm, and in which the non-oriented electrical steel sheet has a {111}<011> integration degree of from 2.00 to 8.00, at a position corresponding to 1/4 of the sheet thickness in the sheet thickness direction from the surface of the steel sheet. The invention also provides a motor core including the non-oriented electrical steel sheet.

## Description

### Technical Field

The present disclosure relates to a non-oriented electrical steel sheet and a motor core.

### Background Art

Products with low energy consumption have been developed in industrial fields, due to the need to reduce global warming gas. In the automotive field, for example, vehicles with low fuel consumption, such as hybrid-driven vehicles in which a gasoline engine and a motor are combined, and motor-driven electric vehicles are known. The technology common in these vehicles with low fuel consumption is that of motors, and achieving a higher efficiency of motors has become an important technique.

In general, a motor includes a stator and a rotor. A non-oriented electrical steel sheet to be used as iron cores of the stator and the rotor are required to have a low iron loss for achieving a higher efficiency.

In practical terms, however, it is necessary to consider a compressive stress to be applied to the stator and the rotor when the motor is running. Such a compressive stress generally deteriorates the iron loss of a non-oriented electrical steel sheet. Therefore, the non-oriented electrical steel sheet to be used for the stator desirably has a favorable iron loss when a compressive stress is applied.

For example, Patent Document 1 discloses a technique related to a non-oriented electrical steel sheet having excellent magnetic properties. Patent Document 2 discloses a technique related to a non-oriented electrical steel sheet capable of improving motor efficiency. Patent Document 3 discloses a technique related to a non-oriented electrical steel sheet having excellent magnetic properties.
Patent Document 1: Japanese Patent (JP-B) No. 5447167
Patent Document 2: JP-B No. 5716315
Patent Document 3: WO 2013/069754

### SUMMARY OF THE INVENTION

### Technical Problem

The present disclosure has been made in view of the above-mentioned problem, and an object of the present disclosure is to provide: a non-oriented electrical steel sheet which is suitable as a material of a stator iron core and a rotor iron core of a motor, for example, and in which the deterioration of iron loss is small when a compressive stress is applied; and a motor core including the same.

### Solution to Problem

The gist of the present disclosure is as follows.
[1] A non-oriented electrical steel sheet, having a chemical composition consisting of, in terms of % by mass:
   0.006% or less of C,
   from 1.0% to 5.0% of Si,
   less than 2.5% of sol. Al,
   3.0% or less of Mn,
   0.30% or less of P,
   0.010% or less of S,
   0.010% or less of N,
   0.10% or less of O,
   from 0 to 0.20% of Sn,
   from 0 to 0.20% of Sb,
   from 0 to 0.01% of Ca,
   from 0 to 5.0% of Cr,
   from 0 to 5.0% of Ni,
   from 0 to 5.0% of Cu,
   from 0 to 0.10% of Ce,
   from 0 to 0.10% of B,
   from 0 to 0.10% of Mg,
   from 0 to 0.10% of Ti,
   from 0 to 0.10% of V:
   from 0 to 0.10% of Zr,
   from 0 to 0.10% of Nd,
   from 0 to 0.10% of Bi,
   from 0 to 0.10% of W,
   from 0 to 0.10% of Mo,
   from 0 to 0.10% of Nb,
   from 0 to 0.10% of Y, and
   a balance of Fe and impurities, wherein
   the non-oriented electrical steel sheet has an average crystal grain size of from 30 µm to 200 µm, and
   the non-oriented electrical steel sheet has a {111}<011> integration degree of from 2.00 to 8.00, at a position corresponding to 1/4 of a sheet thickness in a sheet thickness direction from a surface of the steel sheet.
[2] The non-oriented electrical steel sheet according to [1], wherein the non-oriented electrical steel sheet comprises, in terms of % by mass, one or more elements selected from the group consisting of:
   from 0.0010% to 0.20% of Sn,
   from 0.0010% to 0.20% of Sb,
   from 0.0003% to 0.01% of Ca,
   from 0.0010% to 5.0% of Cr,
   from 0.0010% to 5.0% of Ni,
   from 0.0010% to 5.0% of Cu,
   from 0.001% to 0.10% of Ce,
   from 0.0001% to 0.10% of B,
   from 0.0001% to 0.10% of Mg,
   from 0.0001% to 0.10% of Ti,
   from 0.0001% to 0.10% of V,
   from 0.0002% to 0.10% of Zr,
   from 0.002% to 0.10% of Nd,
   from 0.002% to 0.10% of Bi,
   from 0.002% to 0.10% of W,
   from 0.002% to 0.10% of Mo,
   from 0.0001% to 0.10% of Nb, and
   from 0.002% to 0.10% of Y
[3] The non-oriented electrical steel sheet according to [1] or [2], wherein the non-oriented electrical steel sheet has a {110}<001> integration degree of 1.00 or more, at a position corresponding to 1/4 of the sheet thickness in the sheet thickness direction from the surface of the steel sheet.
[4] The non-oriented electrical steel sheet according to any one of [1] to [3], wherein a value of a ratio of {111}<112> integration degree / {111}<011> integration degree is 1.00 or less, at a position corresponding to 1/4 of the sheet thickness in the sheet thickness direction from the surface of the steel sheet.
[5] The non-oriented electrical steel sheet according to any one of [1] to [4], wherein the non-oriented electrical steel sheet has a {411}<148> integration degree of 2.00 or less, at a position corresponding to 1/4 of the sheet thickness in the sheet thickness direction from the surface of the steel sheet.
[6] The non-oriented electrical steel sheet according to any one of [1] to [5], wherein the non-oriented electrical steel sheet has a {411}<011> integration degree of 2.00 or less, at a position corresponding to 1/4 of the sheet thickness in the sheet thickness direction from the surface of the steel sheet.
[7] The non-oriented electrical steel sheet according to any one of [1] to [6], wherein the sheet thickness of the non-oriented electrical steel sheet is from 0.10 mm to 0.35 mm.
[8] A motor core having a structure in which a plurality of the non-oriented electrical steel sheets according to any one of [1] to [7] are stacked one on another in layers.

### Advantageous Effects of Invention

According to the above-described aspects of the present disclosure, it is possible to provide: a non-oriented electrical steel sheet which can be suitably used as a material of a stator iron core and a rotor iron core of a motor, for example, and in which the deterioration of iron loss is small when a compressive stress is applied; and a motor core including the same.

### DESCRIPTION OF EMBODIMENTS

One suitable embodiment of a non-oriented electrical steel sheet according to the present disclosure will be described below in detail. However, the present disclosure is not limited only to the configurations disclosed in the following embodiment, and various modification can be made without departing from the gist of the present disclosure. Further, a limiting range of numerical values in the present disclosure includes each of the numerical values described as a lower limit value and an upper limit value, unless otherwise defined. However, a numerical value described using the term "more than (or higher than)" or "less than" is not included in the numerical range. The symbol "%" used in relation to the content of each element means "% by mass."

Further, in numerical ranges described in stages, in the present specification, the upper limit value of a certain numerical range described in stages may be replaced with the upper limit value of another numerical range in stages, or may be replaced with a value shown in Examples.

In numerical ranges described in stages, in the present specification, the lower limit value of a certain numerical range described in stages may be replaced with the lower limit value of another numerical range in stages, or may be replaced with a value shown in Examples.

In a case in which a preferred lower limit value and a preferred upper limit value of the content of each element are described separately, a numerical range in which any lower limit value and any upper limit value are combined may be used as a preferred content of the element.

In a case in which the lower limit value of the content of an element is described as 0% in the expression "from 0 to *" or "0% or more", or in a case in which only the upper limit value is described, it means that the element need not necessarily be contained.

### [Non-oriented Electrical Steel Sheet]

The non-oriented electrical steel sheet according to the present disclosure can be suitably used for use in an iron core of a motor of an electric vehicle, a hybrid vehicle or the like. The definition of the "non-oriented electrical steel sheet" as used herein includes not only a coil product, but also a steel sheet (iron core material) constituting an iron core.

In other words, the definition of the "non-oriented electrical steel sheet" in each embodiment of the present disclosure includes not only a "steel sheet" in the form of a coil or a cut plate, which is in a state produced by a steel sheet manufacturer, but also a "steel sheet" that has been processed in the form of a motor core by punching, stacking or the like, by a consumer, and that constitutes a motor core.

### (Chemical Composition)

First, the reasons for limiting the chemical composition of the non-oriented electrical steel sheet according to the present disclosure will be described.

The chemical composition of the non-oriented electrical steel sheet according to the present disclosure contains Si, and contains selective elements, if necessary, with the balance consisting of Fe and impurities. Each element will be described below.

### C: from 0% to 0.006%

C (carbon) is an element which is contained as an impurity, and which deteriorates magnetic properties. Accordingly, the content of C is set to 0.006% or less. The C content is preferably 0.003% or less. Since a lower C content is preferred, there is no need to limit the lower limit value, and the lower limit value may be 0%. However, it is not easy to industrially achieve a C content of 0%, and therefore, the lower limit value may be 0.0005%, or may be 0.0010%.

### Si: from 1.0% to 5.0%

Si (silicon) is an element effective for reducing the iron loss by increasing the specific resistance of the steel sheet. Accordingly, the content of Si is set to 1.0% or more. Further, Si is an element effective for decreasing the magnetic in-plane anisotropy and decreasing the mechanical in-plane anisotropy, of the non-oriented electrical steel sheet for use as an iron core of a motor. In this case, the Si content is preferably more than 2.0% but equal to or less than 5.0%, more preferably from 2.5% to 5.0%, still more preferably from 3.0% to 5.0%, and yet still more preferably from 3.2% to 5.0%. On the other hand, an excessive amount of Si leads to a marked decrease in magnetic flux density. Accordingly, the Si content is set to 5.0% or less. From the viewpoint of reducing a decrease in the magnetic flux density, the Si content is preferably from 1.0% to 4.5%, more preferably from 1.0% to 4.0%, and still more preferably from 1.0% to 3.5%.

### sol. Al: 0% or more but less than 2.5%

Al (aluminum) is a selective element effective for reducing the iron loss by increasing the specific resistance of the steel sheet. However, an excessive amount of Al leads to a marked decrease in the magnetic flux density. Accordingly, the content of sol. Al is set to less than 2.5%. There is no need to limit the lower limit value of the sol. Al content, and the lower limit value may be 0%. To more reliably obtain the effect provided by the above-described effect, however, the sol. Al content is preferably set to 0.03% or more, and more preferably set to 0.10% or more. The term "sol. Al" refers to acid soluble aluminum.

Si and Al are elements effective for decreasing the magnetic in-plane anisotropy and decreasing the mechanical in-plane anisotropy of the steel sheet. Accordingly, the total content of Si and sol. Al is preferably more than 2.0%, more preferably more than 3.0%, and still more preferably more than 4.0%. On the other hand, Si and Al have a high solid solution strengthening ability, and an excessive amount thereof makes it difficult to perform cold rolling. Accordingly, the total content of Si and sol. Al is preferably set to less than 5.5%.

### Mn: from 0% to 3.0%

Mn (manganese) is a selective element effective for reducing the iron loss by increasing the specific resistance of the steel sheet. However, since the alloy cost of Mn is higher than that of Si or Al, a higher Mn content leads to a disadvantage in terms of cost. Accordingly, the Mn content is set to 3.0% or less. The Mn content is preferably 2.7% or less, and more preferably 2.5% or less. There is no need to limit the lower limit value of the Mn content, and the lower limit value may be 0%. To more reliably obtain the effect provided by the above-described effect, however, the Mn content is preferably 0.0010% or more, more preferably 0.0030% or more, and still preferably 0.010% or more.

### P: from 0% to 0.30%

P (phosphorus) is an element which is generally contained as an impurity. However, P has the effect of improving the magnetic properties by improving the texture of the non-oriented electrical steel sheet. Therefore, P may be contained, if necessary. P is also a solid solution strengthening element, so an excessive P content causes the steel sheet to be hard, making it difficult to perform cold rolling. Accordingly, the P content is set to 0.30% or less. The P content is preferably 0.20% or less. There is no need to limit the lower limit value of the P content, and the lower limit value may be 0%. To more reliably obtain the effect provided by the above-described effect, however, the P content is preferably 0.0010% or more, more preferably 0.010% or more, and still more preferably 0.015% or more.

### S: from 0% to 0.010%

S (sulfur) is contained as an impurity. S combines with Mn in the steel to form fine MnS, inhibits the growth of crystal grains during annealing, and deteriorates the magnetic properties of the non-oriented electrical steel sheet. Accordingly, the content of S is set to 0.010% or less. The S content is preferably 0.005% or less, and more preferably 0.003% or less. Since a lower S content is preferred, there is no need to limit the lower limit value, and the lower limit value may be 0%. However, it is not easy to industrially achieve a S content of 0%, and therefore, the lower limit value may be 0.0001%, or may be 0.001%.

### N: from 0% to 0.010%

N (nitrogen) is contained as an impurity. N combines with Al to form fine AlN, inhibits the growth of crystal grains during annealing, and deteriorates magnetic properties. Accordingly, the content of N is set to 0.010% or less. The N content is preferably 0.005% or less, and more preferably 0.003% or less. Since a lower N content is preferred, there is no need to limit the lower limit value, and the lower limit value may be 0%. However, it is not easy to industrially achieve a N content of 0%, and therefore, the lower limit value may be 0.0001% or more, 0.0010% or more, or 0.0015% or more.

### O: from 0% to 0.10%

O (oxygen) is contained as an impurity and deteriorates magnetic properties by forming oxides. Accordingly, the content of O is set to 0.10% or less. The O content is preferably 0.08% or less, more preferably 0.05% or less, still more preferably 0.010% or less, and particularly preferably 0.008% or less. Since a lower O content is preferred, there is no need to limit the lower limit value, and the lower limit value may be 0%. However, it is not easy to industrially achieve an O content of 0%, and therefore, the lower limit value may be 0.0001% or more, 0.0005% or more, or 0.0008% or more.

The chemical composition of the non-oriented electrical steel sheet according to the present disclosure may contain, in addition to the elements described above, at least one selected from the group consisting of Sn, Sb, Ca, Cr, Ni, Cu and Ce, as a selective element. For example, the contents of these selective elements may be set as follows.

### Sn: from 0% to 0.20%

### Sb: from 0% to 0.20%

Sn (tin) and Sb (antimony) are selective elements that have the effect of improving the magnetic properties (such as magnetic flux density) by improving the texture of the non-oriented electrical steel sheet. Therefore, Sn and Sb may be contained, if necessary. However, an excessive amount of Sn and/or Sb may lead to the embrittlement of the steel, possibly causing rupture during cold rolling, or may deteriorate the magnetic properties. Accordingly, each of the contents of Sn and Sb is set to 0.20% or less. There is no need to limit the lower limit value of each of the contents of Sn and Sb, and the lower limit value may be 0%. To more reliably obtain the effect provided by the above-described effect, however, the Sn content is preferably 0.0010% or more, and more preferably 0.01% or more. Further, the Sb content is preferably 0.0010% or more, more preferably 0.002% or more, and still more preferably 0.01% or more.

### Ca: from 0% to 0.01%

Ca (calcium) is a selective element effective for controlling inclusions, because Ca inhibits the precipitation of fine sulfides (such as MnS and Cu₂S) by forming coarse sulfides. Adding an adequate amount of Ca provides the effect of improving the magnetic properties (such as iron loss) by improving crystal grain growth. However, an excessive amount of Ca leads to the saturation of the effect provided by the above-described effect, resulting in an increase in the cost. Accordingly, the content of Ca is set to 0.01% or less. The Ca content is preferably 0.008% or less, and more preferably 0.005% or less. There is no need to limit the lower limit value of the Ca content, and the lower limit value may be 0%. To more reliably obtain the effect provided by the above-described effect, however, the Ca content is preferably set to 0.0003% or more. The Ca content is preferably 0.001% or more, and more preferably 0.002% or more.

### Cr: from 0% to 5.0%

Cr (chromium) is a selective element that improves the magnetic properties (such as iron loss) by increasing the specific resistance. However, an excessive amount of Cr may lead to a decrease in saturation magnetic flux density. In addition, the effect provided by the above-described effect is saturated, resulting in an increase in the cost. Accordingly, the content of Cr is set to 5.0% or less. The Cr content may be 4.0% or less, and is preferably 0.5% or less, and more preferably 0.1% or less. There is no need to limit the lower limit value of the Cr content, and the lower limit value may be 0%. To more reliably obtain the effect provided by the above-described effect, however, the Cr content is preferably 0.0010% or more.

### Ni: from 0% to 5.0%

Ni (nickel) is a selective element that improves the magnetic properties (such as saturation magnetic flux density). However, an excessive amount of Ni leads to the saturation of the effect provided by the above-described effect, resulting in an increase in the cost. Accordingly, the content of Ni is set to 5.0% or less. The Ni content may be 4.0% or less, and is preferably 0.5% or less, and more preferably 0.1% or less. There is no need to limit the lower limit value of the Ni content, and the lower limit value may be 0%. To more reliably obtain the effect provided by the above-described effect, however, the Ni content is preferably 0.0010% or more.

### Cu: from 0% to 5.0%

Cu (copper) is a selective element that improves the strength of the steel sheet. However, an excessive amount of Cu may lead to a decrease in saturation magnetic flux density. In addition, the effect provided by the above-described effect is saturated, resulting in an increase in the cost. Accordingly, the content of Cu is set to 5.0% or less. The Cu content may be 4.0% or less, and is preferably 0.1% or less. There is no need to limit the lower limit value of the Cu content, and the lower limit value may be 0%. To more reliably obtain the effect provided by the above-described effect, however, the Cu content is preferably 0.0010% or more.

### Ce: from 0% to 0.10%

Ce (cerium) is a selective element that inhibits the precipitation of fine sulfides (such as MnS and Cu₂S) by forming coarse sulfides and oxysulfides, thereby achieving a favorable grain growth to reduce the iron loss. However, an excessive amount of Ce leads to the formation of oxides other than sulfides and oxysulfides, possibly resulting in the deterioration of iron loss. In addition, the effect provided by the above-described effect is saturated, resulting in an increase in the cost. Accordingly, the content of Ce is set to 0.10% or less. The Ce content is preferably 0.01% or less. There is no need to limit the lower limit value of the Ce content, and the lower limit value may be 0%. To more reliably obtain the effect provided by the above-described effect, however, the Ce content is preferably 0.001% or more. The Ce content is more preferably 0.002% or more, still more preferably 0.003% or more, and yet still more preferably 0.005% or more.

The chemical composition of the non-oriented electrical steel sheet according to the present disclosure may further contain, for example, at least one selected from the group consisting of B, Mg, Ti, V, Zr, Nd, Bi, W, Mo, Nb and Y, as a selective element. The contents of these selective elements can be controlled based on known findings. For example, the contents of these selective elements may be set as follows:
B: from 0% to 0.10%,
Mg: from 0% to 0.10%,
Ti: from 0% to 0.10%,
V: from 0% to 0.10%,
Zr: from 0% to 0.10%,
Nd: from 0% to 0.10%,
Bi: from 0% to 0.10%,
W: from 0% to 0.10%,
Mo: from 0% to 0.10%,
Nb: from 0% to 0.10%, and
Y: from 0% to 0.10%.

Further, in addition to containing from 1.0% to 5.0% of Si, the chemical composition of the non-oriented electrical steel sheet according to the present disclosure preferably contains, in terms of % by mass, at least one element selected from the group consisting of:
from 0.0010% to 0.006% of C,
0.10% or more but less than 2.5% of sol. Al,
from 0.0010% to 3.0%, of Mn,
from 0.0010% to 0.30% of P,
from 0.0001% to 0.010% of S,
more than 0.0015% but equal to or less than 0.010% of N,
from 0.0001% to 0.10% of O,
from 0.0010% to 0.20% of Sn,
from 0.0010% to 0.20% of Sb,
from 0.0003% to 0.01% of Ca,
from 0.0010% to 5.0% of Cr,
from 0.0010% to 5.0% of Ni,
from 0.0010% to 5.0% of Cu,
from 0.001% to 0.10% of Ce,
from 0.0001% to 0.10% of B,
from 0.0001% to 0.10% of Mg,
from 0.0001% to 0.10% of Ti,
from 0.0001% to 0.10% of V,
from 0.0002% to 0.10% of Zr,
from 0.002% to 0.10% of Nd,
from 0.002% to 0.10% of Bi,
from 0.002% to 0.10% of W,
from 0.002% to 0.10% of Mo,
from 0.0001% to 0.10% of Nb, and
from 0.002% to 0.10% of Y

The content of B is preferably 0.02% or less, and more preferably 0.01% or less. The content of Mg is preferably 0.01% or less, and more preferably 0.005% or less. The content of Ti is preferably 0.100% or less, and more preferably 0.002% or less.

The content of V is preferably 0.05% or less, and more preferably 0.04% or less.

The content of Zr is preferably 0.08% or less, and more preferably 0.06% or less.

The content of Nd is preferably 0.05% or less, and more preferably 0.01% or less.

The content of Bi is preferably 0.05% or less, and more preferably 0.01% or less.

The content of W is preferably 0.05% or less, and more preferably 0.01% or less.

The content of Mo is preferably 0.05% or less, and more preferably 0.01% or less.

The content of Nb is preferably 0.05% or less, and more preferably 0.03% or less.

The content of Y is preferably 0.05% or less, and more preferably 0.01% or less.

From the viewpoint that the effects to be described later can be obtained, preferred lower limit values of the contents of the respective elements are as follows.

The B content is preferably 0.0002% or more.

The Mg content is preferably 0.0004% or more.

The Ti content is preferably 0.001% or more.

The V content is preferably 0.002% or more.

The Zr content is preferably 0.002% or more.

The Nd content is preferably 0.002% or more.

The Bi content is preferably 0.002% or more.

The W content is preferably 0.002% or more.

The Mo content is preferably 0.002% or more.

The Nb content is preferably 0.002% or more.

The Y content is preferably 0.002% or more.

The above-described optional elements can be classified into the following Group A to Group E, based on the differences in the effects provided by the respective elements.
[Group A]: Sn, Sb, Ca, Cr, Ni, Cu, and Ce
   Elements capable of providing the effect of improving the magnetic properties and/or the mechanical properties, through texture, inclusion control, specific resistance, saturation magnetic flux density, solid solution strengthening, and/or the like.
[Group B]: Ti, V, Zr, and Nb
   Elements capable of providing the effect of improving the grain growth through coarsening of precipitates
[Group C]: Mg, Nd, Bi, and Y
   Elements capable of providing the effect of controlling inclusions, such as sulfides and oxides
[Group D]: B
   An element capable of providing a suitable effect by controlling nitrides
[Group E] Elements capable of providing an effect suitable for improving the mechanical properties
   W and Mo

The non-oriented electrical steel sheet according to the present disclosure may contain one or more elements selected from the group consisting of elements included in Groups A to E described above. For example, the non-oriented electrical steel sheet may contain one or more elements included in Group A, Group B, Group C, Group D, and/or Group E.

The chemical composition described above can be measured by a common method of analyzing steel. For example, the chemical composition can be measured using inductively coupled plasma-atomic emission spectrometry (ICP-AES). The measurement of sol. Al can be performed by ICP-AES, using a filtrate obtained after thermally decomposing a sample with an acid. Further, Si can be measured using ICP atomic emission spectroscopy, C and S can be measured using a combustion-infrared absorptiometry method, N can be measured using an inert gas fusion-thermal conductivity method, and O can be measured using an inert gas fusion-non-dispersive infrared absorption method.

The chemical composition described above is the composition of the non-oriented electrical steel sheet which does not include an insulating coating or the like. In a case in which the non-oriented electrical steel sheet to be used as a measurement sample has an insulating coating or the like on the surface of the steel sheet, the measurement is performed after removing the coating or the like. For example, the insulating coating or the like can be removed by the following method. First, the non-oriented electrical steel sheet having an insulating coating or the like is immersed in an aqueous solution of sodium hydroxide, an aqueous solution of sulfuric acid and an aqueous solution of nitric acid, in the order mentioned, and then washed. Finally, the steel sheet is dried with warm air. As a result, it is possible to obtain the non-oriented electrical steel sheet from which the insulating coating has been removed. Further, the insulating coating or the like may be removed by grinding.

### (Characteristics of Crystal Orientations)

The non-oriented electrical steel sheet according to the present disclosure has a {111}<011> integration degree of from 2.00 to 8.00, at a position corresponding to 1/4 of the sheet thickness in the sheet thickness direction from the surface of the steel sheet (hereinafter, the description "at a position corresponding to 1/4 of the sheet thickness in the sheet thickness direction from the surface of the steel sheet," is sometimes omitted).

The "integration degree" of a crystal orientation in the present disclosure is an index usually used when indicating the texture. For example, the "{111}<011> integration degree" is an index indicating how many times the frequency of existence of crystal grains having the crystal orientation {111}<011> is, with respect to a structure having a random orientation distribution (in this case, the integration degree is 1).

In addition to the fact that the non-oriented electrical steel sheet according to the present disclosure has a {111}<011> integration degree of from 2.00 to 8.00, at a position corresponding to 1/4 of the sheet thickness in the sheet thickness direction from the surface of the steel sheet, it is preferred that the steel sheet satisfies at least one of the following conditions: the steel sheet has a {110}<001> integration degree of 1.00 or more; the value of the ratio of {111}<112> integration degree / {111}<011> integration degree is 1.00 or less; the steel sheet has a {411}<148> integration degree of 2.00 or less; and the steel sheet has a {411}<011> integration degree of 2.00 or less.

The fact that the {111}<011> integration degree is from 2.00 to 8.00 is an important characteristic in the non-oriented electrical steel sheet according to the present disclosure. The {111}<011> orientation is an orientation having favorable magnetic properties when a stress is applied.

Further, the present inventors succeeded in balancing the magnetic properties both in normal conditions and stress-applied conditions, at a high level, by appropriately controlling the integration degree of {111}<011> and at least one of the integration degrees of {110}<001>, {111}<112>, {411}<148> and {411}<011> orientations, simultaneously.

The {110}<001> orientation is an orientation having excellent magnetic properties, and the integration degree thereof is preferably set to 1.00 or more.

The {111}<112> orientation is an orientation in which the deterioration of the magnetic properties in stress-applied conditions can be maximally avoided. However, an extremely high integration degree leads to inferior magnetic properties in a state in which a compressive stress is not applied. Therefore, the value of the ratio (integration degree ratio) of {111 }<112> integration degree/{111}<011> integration degree is desirably set to 1.00 or less, in view of the balance of integration degree with {111}<011>, which is an orientation being equivalent lattice plane to {111}<112> and having approximately the same impact on the magnetic properties as {111}<112>.

The {411}<148> orientation is an orientation in which the magnetic properties are more likely to be inferior when a compressive stress is applied, and the integration degree thereof is preferably set to 2.00 or less.

The {411}<011> orientation is an orientation in which the magnetic properties are more likely to be inferior when a compressive stress is applied, and the integration degree thereof is preferably set to 2.00 or less.

The crystal orientations can be measured by the following method. A steel sheet sample cut out from the steel sheet and having a size of about 30 mm × 30 mm is subjected to mechanical polishing and chemical polishing, to remove a surface layer from the surface of the steel sheet on one side to a 1/4t portion. The term "1/4t portion" as used herein refers to a portion corresponding to a depth of t × 1/4 from the surface, when the thickness of the steel sheet is defined as t. Each test piece for measurement having a thickness that is reduced until the 1/4t portion of the original steel sheet becomes the surface, when removing the surface layer described above, is prepared. However, it may be difficult to expose the surface precisely at the 1/4t portion, when removing the surface layer from the surface of the steel sheet on one side to the 1/4t portion by mechanical polishing and chemical polishing, and thus, a certain degree of margin for removal is permitted. In view of the average crystal grain size (from 30 to 200 µm) of the non-oriented electrical steel sheet according to the present disclosure, the integration degrees of the crystal orientations, in a region corresponding to the average crystal grain size of the steel sheet in the depth direction with respect to the depth 1/4t portion from the steel sheet surface, can be considered about the same. In view of a preferred sheet thickness (from 0.10 mm to 0.35 mm), the crystal orientations can be measured by exposing a plane at a depth of 1/4t ±1/8t from the steel sheet surface, namely, a plane at a depth within a range of from 1/8t to 3/8t, by mechanical polishing and chemical polishing.

After polishing the sample taken from the steel sheet to remove the surface layer to the 1/4t portion thereof, the crystal orientations can be determined by an electron back scattering diffraction (EBSD) method. The polished sample is desirably observed at an observation visual field of from 2,400 µm² to 2.5 mm², per visual field, and it is desired to use the mean value of the respective numerical values calculated for plural visual fields of from two to five locations. An orientation determination function (ODF) is calculated from the results of the above-described observation. Thereafter, the integration degree of each orientation at the surface of the sample is determined, based on the thus obtained orientation distribution function. The expansion order of ODF is desirably 18 or more, in order to ensure the accuracy of the value of the integration degree.

### (Magnetic Properties)

In the present disclosure, the effect of the invention (namely, the effect of reducing the deterioration of iron loss when a compressive stress is applied) can be confirmed, using the iron loss W10/400 [W/kg], which is the iron loss when excited at a magnetic flux density of 1.0 T and a frequency of 400 Hz. When a rolling direction (direction L), a direction perpendicular to the rolling direction (direction C) and a 45°direction (direction D), of the steel sheet, are defined as excitation directions, and the iron losses in these directions are respectively defined as WL, WC and WD, the mean value of the in-plane properties of the steel sheet, which can be obtained by (WL + WC + 2 × WD)/4, is used as the iron loss. In the present specification, the thus obtained property is sometimes referred to as "in-plane all-around average (iron loss)". The rolling direction is obvious in a case in which the non-oriented electrical steel sheet is provided in the form of a coil. However, the rolling direction cannot be determined only by the shape of the steel sheet, in a case in which the steel sheet is in the form of a cut plate, or in a state taken out from a motor iron core. In this case, the rolling direction can be determined by grooves on the steel sheet surface formed during cold rolling. This method is commonly used by those skilled in the art, and it is not difficult to determine the rolling direction by the method.

In the present disclosure, the effect of the invention is confirmed by an amount of deterioration, Ws - Wn, which is determined from the in-plane all-around average iron loss Wn [W/kg] calculated from the iron loss values in the respective in-plane directions in a state in which no load is applied, and from the in-plane all-around average iron loss Ws [W/kg] calculated from the iron loss values in the respective in-plane directions in a state in which a compressive stress of 20 MPa is applied in each excitation direction. In a preferred embodiment of the non-oriented electrical steel sheet according to the present disclosure, the value of Ws - Wn is 8.50 or less. The value of Ws - Wn is more preferably 8.25 or less, and still more preferably 8.00 or less.

Each magnetic property can be measured by a single sheet tester (SST) method as defined in JIS C2556: 2015. When it is difficult to obtain a test piece having a size as defined in JIS, it is also possible to obtain a test piece so as to have a size of a width of 55 mm and a length of 55 mm, for example, and to perform the measurement in accordance with the single sheet tester method. At this time, it is preferred to use an Epstein equivalent value which is converted so as to correspond to a value measured by an Epstein tester as defined in JIS C2550: 2011.

### (Average Crystal Grain Size)

Either an excessively large or small crystal grain size may cause the iron loss under high frequency conditions to deteriorate. Therefore, the average crystal grain size can be set within a common practical range, and is set within a range of from 30 µm to 200 µm.

The average crystal grain size can be measured by an intercept method as defined in JIS G0551: 2020. For example, the mean value of the crystal grain sizes measured by the intercept method in the sheet thickness direction and the rolling direction, in a longitudinal sectional photograph of the structure in the sheet thickness direction, can be used as the average crystal grain size. It is possible to use an optical micrograph as the longitudinal sectional photograph of the structure, and an optical micrograph taken at a magnification of 50 times can be used, for example.

### (Sheet Thickness)

Basically, a lower sheet thickness results in a lower iron loss. The sheet thickness can be set within a common practical range, and is preferably set to 0.35 mm or less. The sheet thickness is more preferably 0.30 mm or less. However, an excessive decrease in the sheet thickness causes a marked decrease in the productivity of the steel sheet or motor, and thus, the sheet thickness is preferably set to 0.10 mm or more. The sheet thickness is more preferably 0.15 mm or more.

The sheet thickness can be measured by a micrometer. In a case in which the non-oriented electrical steel sheet to be used as a measurement sample has an insulating coating or the like on the surface of the steel sheet, the measurement is performed after removing the or the like. The method of removing the insulating coating is as described above.

### [Method of Producing Non-oriented Electrical Steel Sheet]

One example of the method of producing the non-oriented electrical steel sheet according to the present disclosure will be described below. The method of producing the non-oriented electrical steel sheet according to the present disclosure is not particularly limited, as long as the resulting steel sheet has the configurations described above. The following production method is one example for producing the non-oriented electrical steel sheet according to the present disclosure, and is a suitable example of the method of producing the non-oriented electrical steel sheet according to the present disclosure.

The method of producing the non-oriented electrical steel sheet according to the present disclosure includes: a hot rolling step, a first cold rolling step, an intermediate annealing step, a second cold rolling step and a finish annealing step, in the order mentioned. In particular, it is effective to use the following conditions (A) to (E) in these steps. The "temperature", as used in the following description, refers to the surface temperature of the steel sheet.
(A) Heat treatment after hot rolling: a heat treatment at 900°C or higher is not performed, after hot finish rolling and before the start of the first cold rolling.
(B) First cold rolling step: the cold rolling is performed at a rolling reduction of from 30% to 85%.
(C) Intermediate annealing step: the annealing is performed at an average heating rate from 500°C to 650°C, of from 300°C/sec to 1,000°C/sec, at a holding temperature of from 700°C to 1,100°C, for a holding time of from 10 sec to 300 sec, and at an average cooling rate from 700°C to 500°C, of 25°C/sec or more.
(D) Second cold rolling step: the cold rolling is performed at a rolling reduction of from 30% to 75%, to a finish sheet thickness of from 0.10 mm to 0.35 mm.
(E) Finish annealing step: the annealing is performed at a holding temperature of from 900°C to 1,200°C.

Each step will be described below.

### (Hot Rolling Step)

A hot-rolled steel sheet to be subjected to the first cold rolling step can be obtained by subjecting a steel ingot or a steel piece (hereinafter, also referred to as a "slab") having the chemical composition described above, to hot rolling.

In the hot rolling, a steel having the chemical composition described above is formed into a slab by a common method, such as a continuous casting method or a method of blooming a steel ingot, and the resulting slab is placed in a heating furnace, and subjected to hot rolling. At this time, in a case in which the slab has a high temperature, the hot rolling may be performed without placing the slab in a heating furnace.

Various conditions for hot rolling are not particularly limited. In general, conditions of a slab heating temperature of from 950 to 1,250°C, a finishing temperature of from 700 to 1,000°C and a finish sheet thickness of from about 1.0 to 4.0 mm, are used.

### (Heat Treatment on Hot-Rolled Sheet)

The hot-rolled sheet after the completion of the hot rolling is subsequently subjected to the first cold rolling. At this time, a heat treatment at 900°C or higher is not performed on the hot-rolled steel sheet to be subjected to the first cold rolling step, after hot finish rolling. This restriction is aimed for preventing the structure formed by hot processing from changing greatly before being subjected to the first cold rolling. In a case in which the temperature on the exit side of the final path of the hot rolling is 900°C or higher, the hot-rolled sheet is retained in a temperature range of 900°C or higher, during the period from the exit side of the final path until a temperature of less than 900°C is reached by cooling. In general, however, the hot-rolled sheet is cooled to less than 900°C within several seconds, and thus, the retention during this period can be ignored in the present disclosure. Accordingly, the above-described heat treatment in the present disclosure is targeted for a thermal history caused by the coiling of the hot-rolled sheet or the annealing of the hot-rolled sheet. When a heat treatment at 900°C or higher is performed after the completion of the finish hot rolling, the grain size of the hot-rolled sheet increases, and causes a change in the structure after being subjected to the intermediate annealing step, resulting in a failure to satisfy the above-defined {111}<011> integration degree after the finish annealing. Therefore, it is not preferred to retain heat after the coiling of the hot-rolled sheet. In particular, a hot rolling coiling temperature, which is retained for a long period of time, should preferably be set to 850°C or lower, and more preferably 800°C or lower.

### (First Cold Rolling Step)

In the first cold rolling step, the hot-rolled steel sheet having the chemical composition described above is subjected to cold rolling at a rolling reduction (cumulative rolling reduction) of from 30% to 85%.

When the rolling reduction in the first cold rolling step is less than 30% or more than 85%, there is a case in which target magnetic properties cannot be obtained. Accordingly, the rolling reduction in the first cold rolling step is set within a range of from 30% to 85%.

Conditions for cold rolling other than those described above, such as the temperature of the steel sheet during cold rolling, rolling roll diameter and the like, are not particularly limited, and can be selected as appropriate depending on the chemical composition of the hot-rolled steel sheet, the target sheet thickness of the steel sheet and the like.

### (Intermediate Annealing Step)

In the intermediate annealing step, the cold-rolled steel sheet obtained in the first cold rolling step is subjected to intermediate annealing in which the average heating rate from 500°C to 650°C is set within a range of from 300°C/sec to 1,000°C, the holding temperature is set within a range of from 700°C to 1,100°C, the holding time is set within a range of from 10 sec to 300 sec, and the average cooling rate from 700°C to 500°C is set to 25°C/sec or more.

When the above-described conditions in the intermediate annealing step are not satisfied, there is a case in which target magnetic properties cannot be obtained. Conditions for intermediate annealing other than those described above are not particularly limited.

There is no need to limit the upper limit value of the average cooling rate from 700°C to 500°C. However, the upper limit value may be set to 70°C/sec, if necessary.

The holding temperature is preferably 850°C or higher. The holding time is preferably 180 sec or less. The average cooling rate from 700°C to 500°C is preferably set to 28°C/sec or more. Particularly when a Si content of more than 2.0%, an average heating rate from 500°C to 650°C of 300°C/sec or more, a holding temperature of 850°C or higher, a holding time of 180 sec or less and an average cooling rate from 700°C to 500°C of 33°C/sec or more, are all satisfied, in addition to satisfying the respective conditions in the present disclosure, it is possible to obtain a non-oriented electrical steel sheet having favorable magnetic properties when a stress is applied.

### (Second Cold Rolling Step)

In the second cold rolling step, the intermediate-annealed steel sheet obtained in the intermediate annealing step is subjected to cold rolling at a rolling reduction (cumulative rolling reduction) of from 30% to 75%, to achieve a sheet thickness of from 0.10 mm to 0.35 mm.

When the rolling reduction in the second cold rolling step is less than 30% or more than 75%, there is a case in which target magnetic properties cannot be obtained. Accordingly, the rolling reduction in the second cold rolling step is set within a range of from 30% to 75%.

The sheet thickness is preferably set within a range of from 0.10 mm to 0.35 mm. The sheet thickness is more preferably within a range of from 0.15 mm to 0.30 mm.

Conditions for cold rolling other than those described above, such as the temperature of the steel sheet during cold rolling, the rolling roll diameter and the like, are not particularly limited, and can be selected as appropriate depending on the chemical composition of the steel sheet, the target sheet thickness of the steel sheet and the like.

### (Finish annealing step)

In the finish annealing step, the cold-rolled steel sheet obtained in the second cold rolling step is subjected to finish annealing in which the steel sheet is retained within a temperature range of from 900°C to 1,200°C. This is not a special condition, and is one used in the production of a common non-oriented electrical steel sheet.

When the finish annealing step is performed at a finish annealing temperature of less than 900°C, the average crystal grain size may be less than 30 µm due to insufficient grain growth, possibly resulting in a failure to obtain sufficient magnetic properties. Accordingly, the finish annealing temperature is set to 900°C or higher. When the finish annealing temperature is higher than 1,200°C, on the other hand, the grain growth in the orientations other than the {111}<011> orientation by which the non-oriented electrical steel sheet according to the present disclosure is characterized becomes dominant, and causes an excessive grain growth. This may lead to an average crystal grain size of more than 200 µm, possibly resulting in a failure to obtain sufficient magnetic properties. Accordingly, the finish annealing temperature is set to 1,200°C or lower.

The finish annealing time at which the steel sheet is retained in a temperature range of from 900°C to 1,200°C is not particularly limited. However, the finish annealing time is preferably set to 1 second or more, in order to more reliably obtain favorable magnetic properties. From the viewpoint of the productivity, on the other hand, the finish annealing time is preferably set to 120 seconds or less.

Conditions for finish annealing other than those described above are not particularly limited.

The finish annealing described above can be performed following the second cold rolling, by a steel sheet manufacturer. Alternatively, the steel sheet after the completion of the second cold rolling can be shipped, and then the finish annealing can be performed by a consumer of the steel sheet, as a so-called stress-relief annealing namely, a heat treatment carried out in the form of a core, after performing, for example, punching and stacking of steel sheet.

### (Other Steps)

The pickling step is preferably performed to the hot-rolled steel sheet, so that the steel sheet is subjected to cold rolling after removing scales formed on the steel sheet surface during the hot rolling described above.

It is possible to perform a coating step of coating the steel sheet surface to form an insulating coating composed of an organic component(s) alone, an inorganic component(s) alone or an organic-inorganic composite, in accordance with a common method, after the second cold rolling step or after the finish annealing step. It is also possible to coat and form an insulating coating which does not contain chromium, from the viewpoint of reducing environmental impact. Further, the coating step may be a step of forming an insulating coating which exhibits adhesive ability by being heated and pressurized. An acrylic resin, a phenol resin, an epoxy resin, a melamine resin or the like can be used as a coating material which exhibits adhesive ability.

### [Application]

The application of the non-oriented electrical steel sheet according to the present disclosure is not particularly limited, but the steel sheet is suitable as a material of a stator iron core and a rotor iron core of a motor. The non-oriented electrical steel sheet according to the present disclosure can be formed into a motor core having a structure in which a plurality of the steel sheets punched in a predetermined shape are stacked. Such a motor core has a small deterioration in iron loss when a compressive stress is applied, and can contribute to achieving a higher motor efficiency.

### EXAMPLES

Examples will be described below. However, the non-oriented electrical steel sheet according to the present disclosure is in no way limited to the following Examples.

Each of the slabs (ingots) adjusted to the chemical compositions of the steel types shown in Table 1-1 and Table 1-2 was produced in a vacuum melting furnace. In the components shown in Table 1-1 and Table 1-2, the underlined contents indicate that the corresponding contents are outside the range of the present disclosure, and the balance is Fe and impurities. Empty cells indicate that the corresponding components (elements) are not intentionally added.

**[Table 1-1]**

| Steel Type | Chemical Composition (% by mass) | | | | | | | | | | | | | |
|---|---|---|---|---|---|---|---|---|---|---|---|---|---|---|
| | C | Si | Mn | sol.Al | S | P | N | O | B | Mg | Ca | Ti | V | Cr |
| A | 0.002 | 3.3 | 0.7 | 0.4 | 0.001 | 0.01 | 0.005 | 0.02 | | | | | | |
| B | 0.002 | 2.5 | 0.5 | 0.6 | 0.001 | 0.01 | 0.005 | 0.02 | | | | | | |
| C | 0.002 | 2.0 | 1.0 | 0.2 | 0.001 | 0.01 | 0.005 | 0.02 | | | | | | |
| D | 0.001 | 3.3 | 0.7 | 0.4 | 0.001 | 0.01 | 0.005 | 0.03 | 0.02 | | | | | |
| E | 0.002 | 3.3 | 0.7 | 0.4 | 0.004 | 0.02 | 0.005 | 0.02 | | 0.01 | | | | |
| F | 0.003 | 3.3 | 0.7 | 0.4 | 0.0008 | 0.05 | 0.005 | 0.07 | | | 0.002 | | | |
| G | 0.003 | 3.3 | 0.7 | 0.4 | 0.001 | 0.04 | 0.005 | 0.02 | | | | 0.020 | | |
| H | 0.002 | 3.3 | 0.7 | 0.4 | 0.001 | 0.01 | 0.005 | 0.01 | | | | | 0.04 | |
| I | 0.006 | 3.3 | 0.7 | 0.4 | 0.001 | 0.06 | 0.005 | 0.02 | | | | | | 0.05 |
| J | 0.002 | 3.3 | 0.7 | 0.4 | 0.008 | 0.01 | 0.004 | 0.02 | | | | | | |
| K | 0.002 | 3.3 | 0.7 | 0.4 | 0.001 | 0.01 | 0.005 | 0.08 | | | | | | |
| L | 0.002 | 3.3 | 0.7 | 0.4 | 0.001 | 0.02 | 0.007 | 0.02 | | | | | | |
| M | 0.002 | 3.3 | 0.7 | 0.4 | 0.001 | 0.007 | 0.005 | 0.02 | | | | | | |
| N | 0.003 | 3.3 | 0.7 | 0.4 | 0.002 | 0.04 | 0.005 | 0.04 | | | | | | |
| O | 0.003 | 3.3 | 0.7 | 0.4 | 0.001 | 0.01 | 0.005 | 0.02 | | | | | | |
| P | 0.002 | 3.3 | 0.7 | 0.4 | 0.001 | 0.03 | 0.005 | 0.06 | | | | | | |
| Q | 0.002 | 3.3 | 0.7 | 0.4 | 0.001 | 0.01 | 0.005 | 0.01 | | | | | | |
| R | 0.004 | 3.3 | 0.7 | 0.4 | 0.001 | 0.006 | 0.008 | 0.008 | | | | | | |
| S | 0.002 | 3.3 | 0.7 | 0.4 | 0.006 | 0.01 | 0.005 | 0.01 | | | | | | |
| T | 0.002 | 3.3 | 0.7 | 0.4 | 0.001 | 0.04 | 0.008 | 0.02 | | | | | | |
| U | 0.003 | 3.3 | 0.7 | 0.4 | 0.004 | 0.09 | 0.005 | 0.07 | | | | | | |
| V | 0.002 | 1.1 | 0.9 | 2.4 | 0.001 | 0.01 | 0.003 | 0.08 | | | | | | |
| W | 0.003 | 1.3 | 2.7 | 0.4 | 0.001 | 0.01 | 0.005 | 0.02 | | | | | | |
| X | **0.016** | 3.3 | 0.7 | 0.4 | 0.003 | 0.01 | 0.003 | 0.06 | | | | | | |
| Y | **0.024** | 3.3 | 0.7 | 0.4 | 0.001 | 0.01 | 0.004 | 0.02 | | | | | | |
| Z | 0.002 | 3.3 | 0.7 | 0.4 | **0.019** | 0.01 | 0.005 | 0.04 | | | | | | |
| AA | 0.002 | 3.3 | 0.7 | 0.4 | **0.015** | 0.01 | 0.009 | 0.04 | | | | | | |
| AB | 0.002 | 3.3 | 0.7 | 0.4 | 0.001 | **0.35** | 0.006 | 0.02 | | | | | | |
| AC | 0.003 | 3.3 | 0.7 | 0.4 | 0.001 | **0.32** | 0.005 | 0.02 | | | | | | |
| AD | 0.002 | 3.3 | 0.7 | 0.4 | 0.001 | 0.01 | **0.032** | 0.02 | | | | | | |
| AE | 0.002 | 3.3 | 0.7 | 0.4 | 0.004 | 0.01 | **0.018** | 0.02 | | | | | | |
| AF | 0.005 | 3.3 | 0.7 | 0.4 | 0.004 | 0.03 | 0.005 | **0.18** | | | | | | |
| AG | 0.002 | 3.3 | 0.7 | 0.4 | 0.001 | 0.02 | 0.005 | **0.16** | | | | | | |
| A1 | 0.002 | 3.3 | 0.7 | 0.4 | 0.001 | 0.001 | 0.002 | 0.002 | | | | | | |
| A2 | 0.002 | 2.5 | 0.5 | 0.6 | 0.001 | 0.01 | 0.001 | 0.01 | | | | | | |
| A3 | 0.002 | 2.0 | 1.0 | 0.2 | 0.002 | 0.01 | 0.002 | 0.002 | | | | | | |
| A4 | 0.001 | 3.1 | 0.7 | 0.4 | 0.001 | 0.01 | 0.0005 | 0.003 | 0.005 | | | | | |
| A5 | 0.0005 | 3.3 | 0.6 | 0.4 | 0.004 | 0.02 | 0.003 | 0.002 | | 0.002 | | | | |
| A6 | 0.003 | 3.3 | 0.7 | 0.4 | 0.0008 | 0.05 | 0.002 | 0.007 | | | 0.002 | | | |
| A7 | 0.003 | 3.3 | 0.8 | 0.4 | 0.001 | 0.04 | 0.0005 | 0.002 | | | | 0.005 | | |
| A8 | 0.002 | 3.3 | 0.7 | 0.1 | 0.001 | 0.01 | 0.002 | 0.001 | | | | | 0.005 | |
| A9 | 0.006 | 3.3 | 0.7 | 0.4 | 0.0008 | 0.06 | 0.001 | 0.002 | | | | | | 0.05 |
| A10 | 0.002 | 3.3 | 0.7 | 0.4 | 0.008 | 0.01 | 0.002 | 0.002 | | | | 0.080 | | |
| A11 | 0.002 | 3.2 | 0.9 | 0.4 | 0.001 | 0.01 | 0.002 | 0.008 | | | | | | |
| A12 | 0.003 | 3.3 | 0.7 | 0.4 | 0.001 | 0.02 | 0.001 | 0.002 | | | | | | |
| A13 | 0.002 | 3.1 | 0.8 | 0.1 | 0.001 | 0.007 | 0.002 | 0.002 | | | | | | |
| A14 | 0.003 | 2.0 | 0.7 | 0.4 | 0.002 | 0.04 | 0.002 | 0.004 | | | | | | 3.0 |
| A15 | 0.003 | 2.0 | 0.7 | 0.4 | 0.001 | 0.001 | 0.002 | 0.002 | | | | | | |
| A16 | 0.002 | 2.0 | 0.7 | 0.4 | 0.001 | 0.03 | 0.0015 | 0.006 | | | | | | |
| A17 | 0.002 | 3.3 | 1.1 | 0.4 | 0.001 | 0.01 | 0.005 | 0.001 | | | | | | |
| A18 | 0.004 | 4.5 | 0.03 | 0.1 | 0.001 | 0.006 | 0.002 | 0.0008 | | | | | | |
| A19 | 0.002 | 3.3 | 0.7 | 0.4 | 0.006 | 0.01 | 0.008 | 0.0015 | | | | | | |
| A20 | 0.002 | 3.3 | 0.7 | 0.4 | 0.001 | 0.04 | 0.002 | 0.002 | | | | | | |
| A21 | 0.003 | 3.3 | 0.7 | 0.4 | 0.003 | 0.09 | 0.005 | 0.007 | | | | | | |
| A22 | 0.002 | 1.1 | 0.9 | 2.4 | 0.001 | 0.01 | 0.003 | 0.008 | | | | | | |
| A23 | 0.003 | 1.3 | 2.7 | 0.03 | 0.001 | 0.02 | 0.005 | 0.002 | | | | | | |
| A24 | **0.016** | 3.3 | 0.7 | 0.4 | 0.003 | 0.01 | 0.002 | 0.006 | | | | | | |
| A25 | **0.024** | 3.3 | 0.7 | 0.03 | 0.001 | 0.01 | 0.002 | 0.002 | | | | | | |
| A26 | 0.002 | 3.3 | 0.7 | 0.4 | **0.019** | 0.01 | 0.005 | 0.004 | | | | | | |
| B1 | 0.002 | 3.3 | 0.7 | 0.4 | **0.015** | 0.01 | 0.009 | 0.004 | | | | | | |
| B2 | 0.002 | 3.3 | 0.7 | 0.4 | 0.001 | **0.35** | 0.006 | 0.002 | | | | | | |
| B3 | 0.003 | 3.3 | 0.7 | 0.01 | 0.001 | **0.32** | 0.005 | 0.002 | | | | | | |
| B4 | 0.002 | 3.3 | 0.7 | 0.4 | 0.001 | 0.01 | **0.032** | 0.002 | | | | | | |
| B5 | 0.002 | 3.3 | 0.7 | 0.4 | 0.004 | 0.01 | **0.018** | 0.002 | | | | | | |
| B6 | 0.005 | 3.3 | 0.7 | 0.4 | 0.004 | 0.03 | 0.005 | **0.32** | | | | | | |
| B7 | 0.002 | 3.3 | 0.7 | 0.5 | 0.001 | 0.02 | 0.005 | **0.25** | | | | | | |

**[Table 1-2]**

| Steel Type | Chemical Composition (% by mass) | | | | | | | | | | | |
|---|---|---|---|---|---|---|---|---|---|---|---|---|
| | Ni | Cu | Zr | Sn | Sb | Ce | Nd | Bi | W | Mo | Nb | Y |
| A | | | | | | | | | | | | |
| B | | | | | | | | | | | | |
| C | | | | | | | | | | | | |
| D | | | | | | | | | | | | |
| E | | | | | | | | | | | | |
| F | | | | | | | | | | | | |
| G | | | | | | | | | | | | |
| H | | | | | | | | | | | | |
| I | | | | | | | | | | | | |
| J | 0.02 | | | | | | | | | | | |
| K | | 0.04 | | | | | | | | | | |
| L | | | 0.05 | | | | | | | | | |
| M | | | | 0.04 | | | | | | | | |
| N | | | | | 0.01 | | | | | | | |
| O | | | | | | 0.01 | | | | | | |
| P | | | | | | | 0.02 | | | | | |
| Q | | | | | | | | 0.01 | | | | |
| R | | | | | | | | | 0.03 | | | |
| S | | | | | | | | | | 0.02 | | |
| T | | | | | | | | | | | 0.02 | |
| U | | | | | | | | | | | | 0.02 |
| V | | | | | | | 0.03 | | | | | |
| W | | | | | | | | 0.02 | | | | |
| X | | | | | | | | | | | | |
| Y | | | | | | | | | | | | |
| Z | | | | | | | | | | | | |
| AA | | | | | | | | | | | | |
| AB | | | | | | | | | | | | |
| AC | | | | | | | | | | | | |
| AD | | | | | | | | | | | | |
| AE | | | | | | | | | | | | |
| AF | | | | | | | | | | | | |
| AG | | | | | | | | | | | | |
| A1 | | | | | | | | | | | | |
| A2 | | | | | | | | | | | | |
| A3 | | | | | | | | | | | | |
| A4 | | | | | | | | | | | | |
| A5 | | | | | | | | | | | | |
| A6 | | | | | | | | | | | | |
| A7 | | | | | | | | | | | | |
| A8 | | | | | | | | | | | | |
| A9 | | | | | | | | | | | | |
| A10 | 0.02 | | | | | | | | | | | |
| A11 | | 0.04 | | | | | | | | | | |
| A12 | | | 0.005 | | | | | | | | | |
| A13 | | | | 0.01 | | | | | | | | |
| A14 | | | | | 0.01 | | | | | | | |
| A15 | 3.0 | | | | | 0.004 | | | | | | |
| A16 | | 3.0 | | | | | 0.005 | | | | | |
| A17 | | | | | | | | 0.005 | | | | |
| A18 | | | | | | | | | 0.005 | | | |
| A19 | | | | | | | | | | 0.005 | | |
| A20 | | | | | | | | | | | 0.005 | |
| A21 | | | | | | | | | | | | 0.005 |
| A22 | | | | | | | 0.03 | | | | | |
| A23 | | | | | | | | 0.02 | | | | |
| A24 | | | | | | | | | | | | |
| A25 | | | | | | | | | | | | |
| A26 | | | | | | | | | | | | |
| B1 | | | | | | | | | | | | |
| B2 | | | | | | | | | | | | |
| B3 | | | | | | | | | | | | |
| B4 | | | | | | | | | | | | |
| B5 | | | | | | | | | | | | |
| B6 | | | | | | | | | | | | |
| B7 | | | | | | | | | | | | |

The slabs (steel types A to B7) whose chemical compositions are shown in Table 1-1 and Table 1-2 were placed in a heating furnace, heated to 1,100°C, and then subjected to hot rolling so as to achieve a sheet thickness of 2.0 mm, to produce hot-rolled steel sheets. Basically, the finishing temperature was set to 850°C, and the coiling temperature was set to 600°C. However, some of the conditions such as the sheet thickness, the finishing temperature, the coiling temperature and the like, were changed, in some of the steel sheets. For example, the finishing temperature was set to 930°C and the coiling temperature was set to 900°C in No. a16. Further, the finishing temperature was set to 1,000°C and the coiling temperature was set to 800°C in Nos. k1 and v1, and the finishing temperature was set to 800°C and the coiling temperature was set to 300°C in No. n1.

The hot-rolled sheet annealing, the first cold rolling, the intermediate annealing, the second cold rolling, and the finish annealing were sequentially performed, for each of these hot-rolled steel sheets. The respective conditions are as shown in Table 2-1, Table 3-1, Table 4-1 and Table 5-1.

In the present Examples, these steps were performed without forming an insulating coating on the surface of the steel sheet.

### [Measurement of Average Crystal Grain Size]

After the finish annealing, the crystal grain size was measured for each of the steel sheets, using an optical micrograph obtained by observing a longitudinal cross section in the sheet thickness direction and the rolling direction at a magnification of 50 times, by the intercept method described above, and then the average crystal grain size was determined.

### [Measurement of Texture]

A steel sheet sample cut out from each steel sheet and having a size of about 30 mm × 30 mm was subjected to mechanical polishing and chemical polishing, to prepare each test piece for measurement having a thickness that was reduced until the 1/4t portion of the original steel sheet becomes the surface. Five locations having an area of 900 µm × 2,500 µm per visual field were observed by EBSD, for each resulting test piece. The orientation distribution function, ODF, was calculated from the observation results, and the integration degree of each orientation at the observed surface was determined based on the orientation distribution function. The mean value of the numerical values calculated for the respective visual fields was used as the integration degree of each orientation.

### [Measurement of Magnetic Properties]

The magnetic properties of each steel sheet were measured by SST. Here, W10/400 [W/kg], which is the iron loss when excited at a magnetic flux density of 1.0 T and a frequency of 400 Hz, were used as the iron loss of each steel sheet. The iron loss Wn [W/kg] in a state in which no load is applied and the iron loss Ws [W/kg] in a state in which a compressive stress of 20 MPa is applied in each excitation direction were obtained from the measured iron loss values, and the value of Ws - Wn was determined. In a case in which the value of Ws - Wn is 8.50 or less, the steel sheet was evaluated as having a favorable iron loss when a compressive stress is applied.

Production conditions for the respective steel sheets are shown in Table 2-1, Table 3-1, Table 4-1, and Table 5-1. The texture, the average crystal grain size, and the magnetic properties are shown in Table 2-2, Table 3-2, Table 4-2, and Table 5-2. Underlined values indicate that the corresponding values are outside the range of the present disclosure or outside the range of the preferred production method described above.

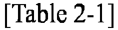

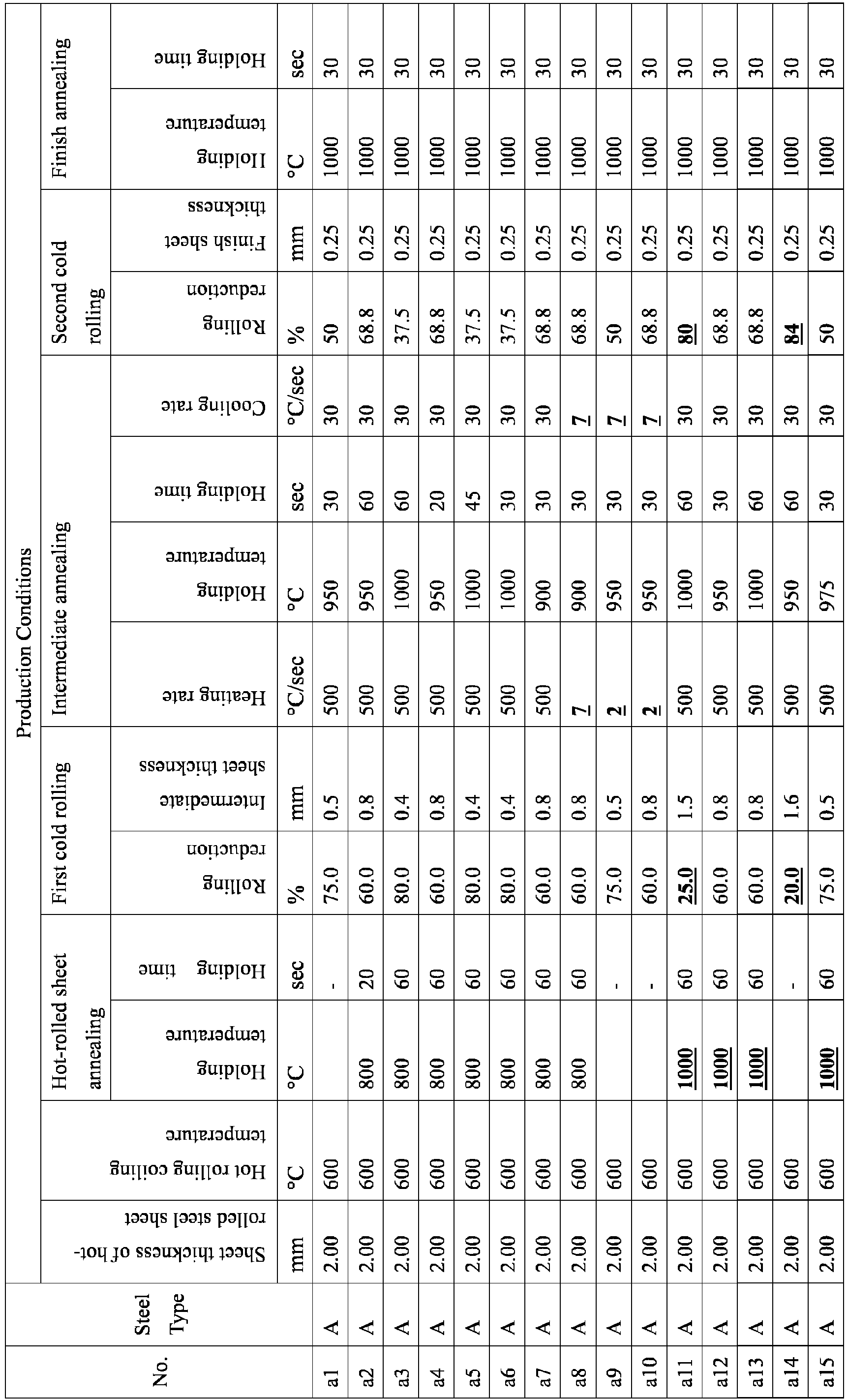

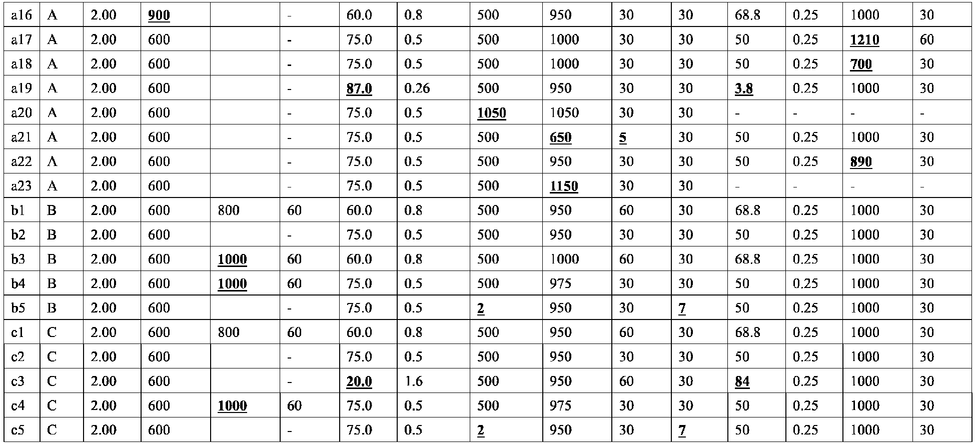

**[Table 2-2]**

| No. | Steel Sheet Properties | | | | | | | | | | Note |
|---|---|---|---|---|---|---|---|---|---|---|---|
| | Integration degree of texture | | | | | | Magnetic properties W10/400 | | | Average crystal grain size µm | |
| | {111}<011> | {111}<112> | {111}<112>/ {111}<011> | {110}<001> | {411}<148> | {411}<011> | In-plane all-around average Wn W/kg | In-plane all-around average [Upon application of 20 MPa] Ws W/kg | Iron loss deterioration Ws - Wn W/kg | | |
| a1 | 5.59 | 3.11 | 0.56 | 1.45 | 1.37 | 0.22 | 12.38 | 20.29 | 7.91 | 73 | Example |
| a2 | 2.77 | 6.51 | 2.35 | 0.39 | 3.44 | 0.13 | 12.43 | 20.60 | 8.17 | 132 | Example |
| a3 | 2.10 | 0.66 | 0.29 | 0.35 | 3.19 | 1.32 | 12.20 | 20.31 | 8.11 | 150 | Example |
| a4 | 2.21 | 4.51 | 2.04 | 1.61 | 2.05 | 1.11 | 12.50 | 20.76 | 8.26 | 82 | Example |
| a5 | 2.20 | 0.66 | 0.29 | 1.21 | 2.23 | 1.32 | 12.32 | 20.42 | 8.10 | 121 | Example |
| a6 | 2.30 | 0.66 | 0.29 | 3.44 | 0.42 | 1.32 | 12.33 | 20.41 | 8.09 | 94 | Example |
| a7 | 2.31 | 2.82 | 1.22 | 0.67 | 2.42 | 1.16 | 12.34 | 20.63 | 8.29 | 84 | Example |
| a8 | **1.54** | 2.95 | 1.92 | 0.87 | 2.12 | 1.10 | 12.34 | 20.93 | 8.59 | 84 | Comparative Example |
| a9 | **1.39** | 2.97 | 2.14 | 0.32 | 3.45 | 0.33 | 12.35 | 20.92 | 8.57 | 83 | Comparative Example |
| a10 | **1.76** | 2.82 | 1.60 | 1.67 | 2.00 | 1.16 | 12.34 | 20.86 | 8.52 | 84 | Comparative Example |
| a11 | **0.90** | 3.01 | 3.35 | 0.35 | 3.19 | 1.22 | 12.26 | 20.81 | 8.54 | 198 | Comparative Example |
| a12 | **1.76** | 2.82 | 1.60 | 1.67 | 2.00 | 1.16 | 12.36 | 20.94 | 8.58 | 84 | Comparative Example |
| a13 | **0.91** | 2.06 | 2.26 | 0.89 | 1.87 | 1.10 | 12.33 | 21.01 | 8.68 | 142 | Comparative Example |
| a14 | **1.39** | 8.94 | 6.42 | 0.02 | 2.85 | 0.54 | 12.84 | 21.65 | 8.81 | 118 | Comparative Example |
| al5 | **1.42** | 1.44 | 0.71 | 4.21 | 1.92 | 0.95 | 12.25 | 21.00 | 8.74 | 95 | Comparative Example |
| al6 | **0.99** | 2.06 | 2.08 | 2.12 | 1.68 | 1.15 | 12.52 | 21.28 | 8.75 | 120 | Comparative Example |
| al7 | **0.90** | 3.05 | 3.40 | 0.34 | 3.20 | 1.19 | 12.45 | 21.54 | 9.09 | 261 | Comparative Example |
| al8 | 2.97 | 2.06 | 0.69 | 2.12 | 1.68 | 1.15 | 19.42 | 31.12 | 11.70 | 26 | Comparative Example |
| a19 | **1.50** | 3.02 | 2.01 | 0.75 | 2.30 | 0.15 | 13.45 | 22.35 | 8.90 | 95 | Comparative Example |
| a20 | - | - | - | - | - | - | - | - | - | - | Comparative Example |
| a21 | **8.50** | 5.60 | 0.66 | 0.85 | 1.41 | 0.25 | 14.10 | 22.78 | 8.68 | 105 | Comparative Example |
| a22 | **1.75** | 2.12 | 1.21 | 0.59 | 0.51 | 1.15 | 13.55 | 22.15 | 8.60 | 60 | Comparative Example |
| a23 | - | - | - | - | - | - | - | - | - | - | Comparative |
| | | | | | | | | | | | Example |
| b1 | 2.52 | 5.71 | 2.27 | 0.39 | 3.44 | 0.13 | 12.88 | 20.96 | 8.07 | 126 | Example |
| b2 | 5.12 | 2.59 | 0.51 | 1.61 | 1.12 | 0.41 | 12.83 | 20.84 | 8.01 | 83 | Example |
| b3 | **0.78** | 2.12 | 6.42 | 0.78 | 1.92 | 1.43 | 12.91 | 21.59 | 8.68 | 143 | Comparative Example |
| b4 | **1.21** | 1.44 | 0.71 | 4.21 | 1.92 | 0.82 | 12.69 | 21.68 | 8.98 | 95 | Comparative Example |
| b5 | **1.50** | 2.74 | 1.83 | 0.41 | 3.22 | 0.19 | 12.91 | 21.79 | 8.88 | 76 | Comparative Example |
| c1 | 2.39 | 5.43 | 2.27 | 0.53 | 3.83 | 0.32 | 13.42 | 21.83 | 8.41 | 93 | Example |
| c2 | 4.59 | 2.58 | 0.56 | 1.49 | 1.37 | 0.42 | 13.20 | 21.65 | 8.44 | 79 | Example |
| c3 | **1.23** | 2.31 | 6.42 | 0.10 | 2.48 | 0.37 | 13.68 | 22.68 | 8.99 | 128 | Comparative Example |
| c4 | **1.32** | 1.71 | 0.71 | 2.98 | 1.72 | 0.91 | 13.18 | 22.28 | 9.10 | 132 | Comparative Example |
| c5 | **1.12** | 2.32 | 2.14 | 0.31 | 3.15 | 0.29 | 13.50 | 22.98 | 9.48 | 79 | Comparative Example |

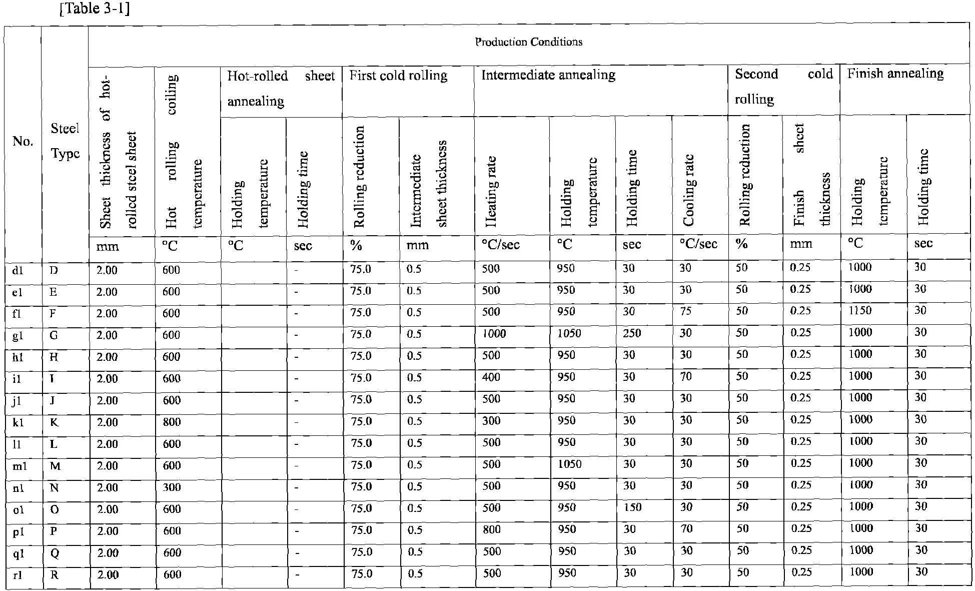

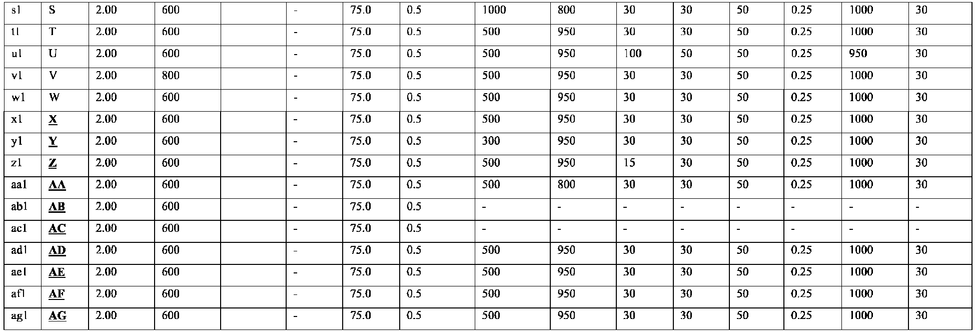

**[Table 3-2]**

| No. | Steel Sheet Properties | | | | | | | | | | Note |
|---|---|---|---|---|---|---|---|---|---|---|---|
| | Integration degree of texture | | | | | | Magnetic properties W10/400 | | | Average crystal grain size µm | |
| | {111}<011> | {111}<112> | {111}<112>/ {111}<011> | {110}<001> | {411}<148> | {411}<011> | In-plane all-around average Wn W/kg | In-plane all-around average [Upon application of 20 MPa] Ws W/kg | Iron loss deterioration Ws - Wn W/kg | | |
| d1 | 5.49 | 2.98 | 0.54 | 1.65 | 1.19 | 0.08 | 12.38 | 20.28 | 7.90 | 75 | Example |
| e1 | 5.51 | 3.10 | 0.56 | 1.58 | 1.28 | 0.23 | 12.31 | 20.24 | 7.94 | 79 | Example |
| f1 | 5.23 | 3.02 | 0.58 | 1.38 | 0.91 | 0.29 | 12.35 | 20.25 | 7.90 | 85 | Example |
| g1 | 5.71 | 2.88 | 0.50 | 1.39 | 0.99 | 0.13 | 12.32 | 20.31 | 8.00 | 70 | Example |
| h1 | 5.49 | 3.34 | 0.61 | 1.58 | 1.41 | 0.29 | 12.35 | 20.31 | 7.96 | 79 | Example |
| i1 | 5.03 | 3.18 | 0.63 | 1.42 | 1.09 | 0.19 | 12.37 | 20.19 | 7.82 | 83 | Example |
| j1 | 5.43 | 3.32 | 0.61 | 1.71 | 1.13 | 0.31 | 12.38 | 20.21 | 7.83 | 75 | Example |
| k1 | 5.66 | 3.54 | 0.63 | 1.50 | 1.22 | 0.08 | 12.37 | 20.24 | 7.87 | 78 | Example |
| l1 | 5.43 | 3.20 | 0.59 | 1.44 | 1.15 | 0.12 | 12.36 | 20.22 | 7.86 | 81 | Example |
| m1 | 5.49 | 3.18 | 0.58 | 1.48 | 1.50 | 0.03 | 12.28 | 20.25 | 7.97 | 79 | Example |
| n1 | 5.39 | 3.07 | 0.57 | 1.38 | 1.01 | 0.32 | 12.34 | 20.29 | 7.95 | 77 | Example |
| o1 | 5.44 | 2.89 | 0.53 | 1.61 | 1.02 | 0.14 | 12.39 | 20.27 | 7.89 | 74 | Example |
| p1 | 5.54 | 2.96 | 0.53 | 1.72 | 1.33 | 0.11 | 12.35 | 20.25 | 7.90 | 72 | Example |
| q1 | 5.86 | 3.43 | 0.59 | 1.56 | 0.78 | 0.30 | 12.41 | 20.23 | 7.81 | 73 | Example |
| r1 | 5.71 | 3.20 | 0.56 | 1.33 | 0.89 | 0.19 | 12.36 | 20.24 | 7.88 | 70 | Example |
| s1 | 5.65 | 3.19 | 0.56 | 1.66 | 1.15 | 0.24 | 12.34 | 20.29 | 7.94 | 77 | Example |
| t1 | 5.33 | 3.38 | 0.63 | 1.51 | 1.00 | 0.41 | 12.33 | 20.33 | 8.00 | 74 | Example |
| u1 | 5.49 | 2.98 | 0.54 | 1.93 | 0.79 | 0.09 | 12.41 | 20.18 | 7.77 | 75 | Example |
| v1 | 5.49 | 3.21 | 0.58 | 1.20 | 0.93 | 0.15 | 12.36 | 20.23 | 7.87 | 77 | Example |
| w1 | 5.50 | 3.41 | 0.62 | 1.58 | 0.88 | 0.19 | 12.36 | 20.21 | 7.85 | 76 | Example |
| x1 | 5.29 | 3.20 | 0.60 | 1.49 | 0.97 | 0.23 | 15.01 | 25.01 | 10.00 | 34 | Comparative Example |
| y1 | 5.41 | 3.19 | 0.59 | 1.39 | 1.48 | 0.51 | 15.71 | 25.89 | 10.18 | 38 | Comparative Example |
| z1 | 5.67 | 3.76 | 0.66 | 1.87 | 1.20 | 0.34 | 15.14 | 25.11 | 9.97 | 36 | Comparative Example |
| aa1 | 5.43 | 3.76 | 0.69 | 1.43 | 0.89 | 0.44 | 15.78 | 25.79 | 10.01 | 37 | Comparative Example |
| ab1 | - | - | - | - | - | - | - | - | - | - | Comparative Example |
| ac1 | - | - | - | - | - | - | - | - | - | - | Comparative Example |
| ad1 | 5.71 | 3.38 | 0.59 | 1.87 | 1.21 | 0.24 | 15.10 | 26.12 | 11.02 | 38 | Comparative Example |
| ae1 | 4.98 | 3.65 | 0.73 | 1.90 | 1.12 | 0.45 | 14.76 | 25.89 | 11.13 | 39 | Comparative Example |
| af1 | 5.12 | 3.20 | 0.63 | 1.88 | 1.32 | 0.32 | 15.11 | 26.11 | 11.00 | 44 | Comparative Example |
| ag1 | 5.89 | 3.71 | 0.63 | 1.78 | 1.12 | 0.22 | 15.76 | 25.89 | 10.13 | 47 | Comparative Example |

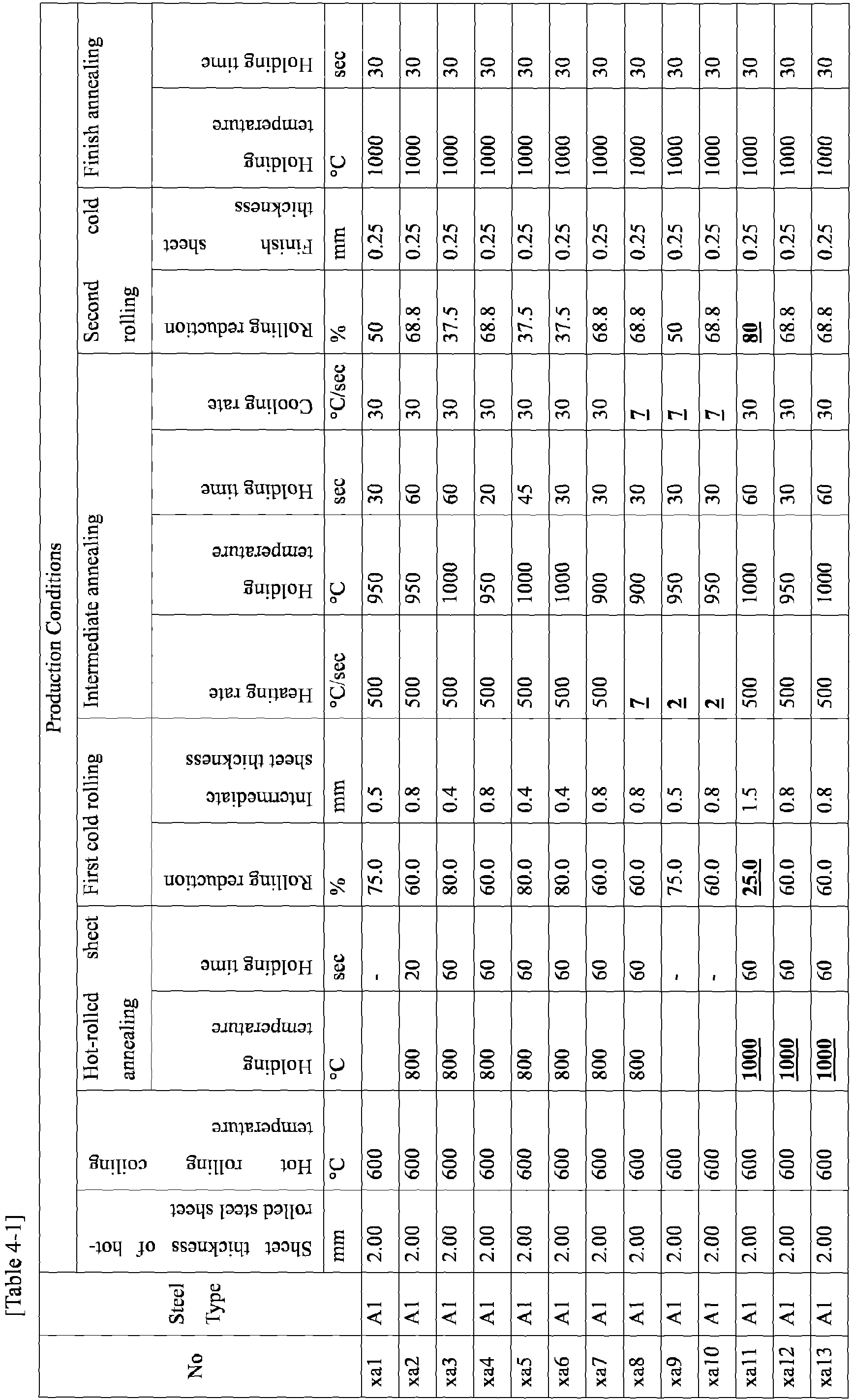

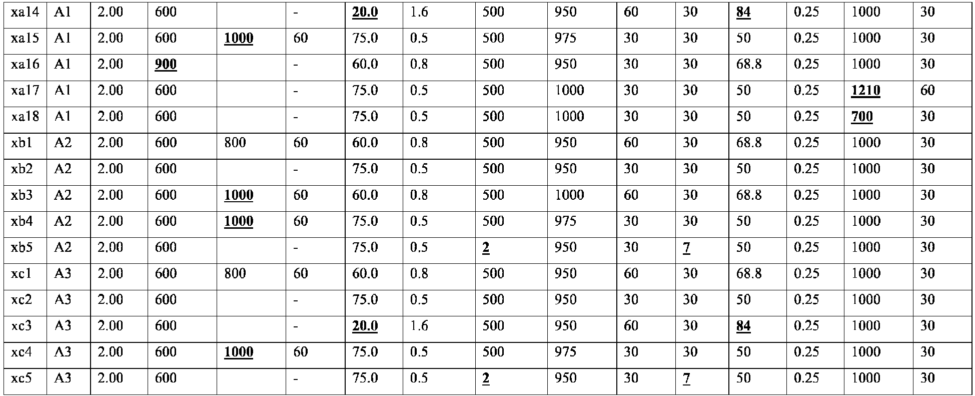

**[Table 4-2]**

| No. | Steel Sheet Properties | | | | | | | | | | Note |
|---|---|---|---|---|---|---|---|---|---|---|---|
| | Integration degree of texture | | | | | | Magnetic properties W10/400 | | | Average crystal grain size µm | |
| | {111}<011> | {111}<112> | {111}<112>/ {111}<011> | {110}<001> | {411}<148> | {411}<011> | In-plane all-around average Wn W/kg | In-plane all-around average [Upon application of 20 MPa] Ws W/kg | Iron loss deterioration Ws - Wn W/kg | | |
| xa1 | 5.23 | 3.21 | 0.61 | 1.31 | 1.29 | 0.24 | 12.21 | 20.28 | 8.07 | 76 | Example |
| xa2 | 2.57 | 6.21 | 2.35 | 0.27 | 3.33 | 0.31 | 12.33 | 20.57 | 8.24 | 135 | Example |
| xa3 | 2.03 | 0.75 | 0.29 | 0.33 | 3.22 | 1.12 | 12.02 | 20.31 | 8.29 | 155 | Example |
| xa4 | 2.09 | 4.31 | 2.06 | 1.49 | 2.09 | 2.11 | 12.29 | 20.75 | 8.46 | 87 | Example |
| xa5 | 2.12 | 0.72 | 0.29 | 1.31 | 2.31 | 1.03 | 12.23 | 20.41 | 8.18 | 127 | Example |
| xa6 | 2.34 | 0.73 | 0.31 | 3.44 | 0.51 | 2.12 | 12.11 | 20.39 | 8.28 | 99 | Example |
| xa7 | 2.34 | 2.85 | 1.22 | 0.45 | 2.66 | 2.01 | 12.21 | 20.61 | 8.40 | 88 | Example |
| xa8 | **1.48** | 2.77 | 1.87 | 0.73 | 2.23 | 1.21 | 11.99 | 20.89 | 8.90 | 88 | Comparative Example |
| xa9 | **1.23** | 2.65 | 2.15 | 0.36 | 3.58 | 0.41 | 12.21 | 20.89 | 8.68 | 88 | Comparative Example |
| xa11 | **1.64** | 2.91 | 1.77 | 1.78 | 1.95 | 1.22 | 12.11 | 20.88 | 8.77 | 90 | Comparative Example |
| xa11 | **0.87** | 3.21 | 3.69 | 0.31 | 3.23 | 1.23 | 12.03 | 20.80 | 8.77 | 201 | Comparative Example |
| xa12 | **1.72** | 2.71 | 1.58 | 1.49 | 1.93 | 1.01 | 12.12 | 20.89 | 8.77 | 89 | Comparative Example |
| xa13 | **0.88** | 2.41 | 2.74 | 0.72 | 1.98 | 1.01 | 12.11 | 20.98 | 8.87 | 146 | Comparative Example |
| xa14 | **1.36** | 9.10 | 6.42 | 0.07 | 2.71 | 0.41 | 12.23 | 21.63 | 9.40 | 124 | Comparative Example |
| xa15 | **1.31** | 1.45 | 0.71 | 4.03 | 1.89 | 0.82 | 12.01 | 20.98 | 8.97 | 103 | Comparative Example |
| xa16 | **0.94** | 2.11 | 2.24 | 2.31 | 1.56 | 2.34 | 12.10 | 21.88 | 9.78 | 128 | Comparative Example |
| xa17 | **0.86** | 3.21 | 3.73 | 0.47 | 3.32 | 1.34 | 12.11 | 21.53 | 9.42 | 250 | Comparative Example |
| xa18 | 2.59 | 2.11 | 0.81 | 2.31 | 1.59 | 2.12 | 20.11 | 31.10 | 10.99 | **28** | Comparative Example |
| xb1 | 2.41 | 5.82 | 2.41 | 0.44 | 3.41 | 0.06 | 12.31 | 20.59 | 8.28 | 130 | Example |
| xb2 | 5.32 | 2.35 | 0.44 | 1.72 | 1.23 | 0.52 | 12.71 | 20.81 | 8.10 | 90 | Example |
| xb3 | **0.69** | 2.23 | 6.42 | 0.69 | 1.89 | 2.11 | 12.65 | 21.48 | 8.83 | 149 | Comparative Example |
| xb4 | **1.28** | 1.31 | 0.71 | 4.11 | 1.90 | 0.71 | 12.49 | 21.64 | 9.15 | 99 | Comparative Example |
| xb5 | **1.47** | 2.56 | 1.74 | 0.53 | 3.21 | 0.21 | 12.78 | 21.71 | 8.93 | 80 | Comparative Example |
| xc1 | 2.27 | 5.23 | 2.30 | 0.31 | 3.78 | 0.41 | 13.23 | 21.41 | 8.18 | 95 | Example |
| xc2 | 4.49 | 2.31 | 0.51 | 1.54 | 1.32 | 0.55 | 13.11 | 21.59 | 8.48 | 85 | Example |
| xc3 | **1.34** | 2.44 | 6.42 | 0.23 | 2.39 | 0.32 | 13.48 | 22.63 | 9.15 | 131 | Comparative |
| | | | | | | | | | | | Example |
| xc4 | **1.41** | 1.84 | 0.71 | 2.79 | 1.68 | 0.81 | 12.98 | 22.12 | 9.14 | 137 | Comparative Example |
| xc5 | **1.21** | 2.41 | 2.14 | 0.43 | 3.09 | 0.41 | 13.22 | 22.79 | 9.57 | 86 | Comparative Example |

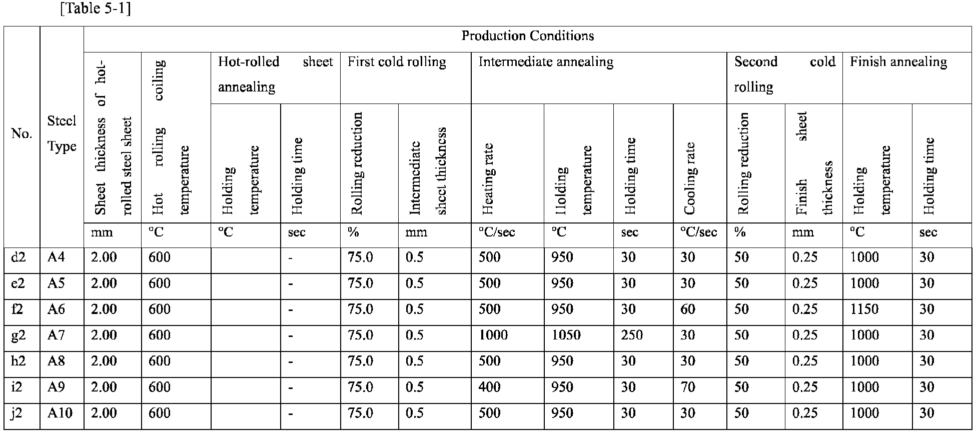

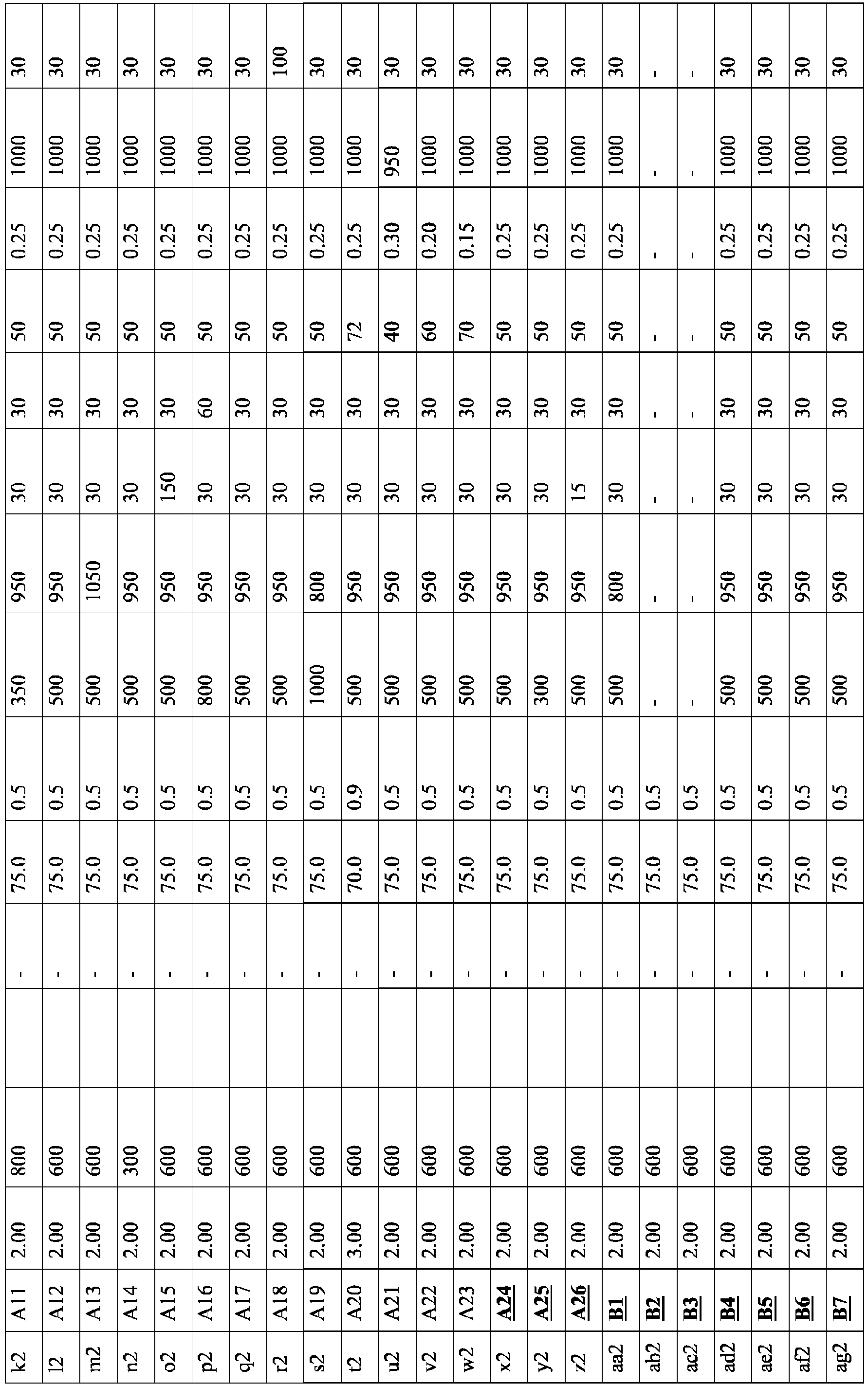

**[Table 5-2]**

| No. | Steel Sheet Properties | | | | | | | | | | Note |
|---|---|---|---|---|---|---|---|---|---|---|---|
| | Integration degree of texture | | | | | | Magnetic properties W10/400 | | | Average crystal grain size | |
| | {111}<011> | {111}<112> | {111}<112>/ {111}<011> | {110}<001> | {411}<148> | {411}<011> | In-plane all-around average | In-plane all-around average | | | |
| | | | | | | | | [Upon application of 20 MPa] | Iron loss deterioration | | |
| | | | | | | | Wn | Ws | Ws - Wn | | |
| | | | | | | | W/kg | W/kg | W/kg | µm | |
| d2 | 5.39 | 2.76 | 0.51 | 1.71 | 1.08 | 0.14 | 12.21 | 20.24 | 8.03 | 81 | Example |
| e2 | 5.31 | 3.22 | 0.61 | 1.88 | 1.20 | 0.31 | 12.11 | 20.21 | 8.10 | 83 | Example |
| f2 | 5.21 | 3.13 | 0.60 | 1.39 | 0.88 | 0.23 | 12.13 | 20.19 | 8.06 | 91 | Example |
| g2 | 5.83 | 2.76 | 0.47 | 1.21 | 0.97 | 0.31 | 12.09 | 20.21 | 8.12 | 76 | Example |
| h2 | 5.61 | 3.42 | 0.61 | 1.56 | 1.31 | 0.12 | 12.04 | 20.19 | 8.15 | 87 | Example |
| i2 | 5.22 | 3.12 | 0.60 | 1.79 | 1.11 | 0.21 | 12.11 | 20.20 | 8.09 | 88 | Example |
| j2 | 5.52 | 3.45 | 0.63 | 1.51 | 1.19 | 0.05 | 12.12 | 20.14 | 8.02 | 84 | Example |
| k2 | 5.79 | 3.63 | 0.63 | 1.74 | 1.29 | 0.41 | 12.13 | 20.13 | 8.00 | 87 | Example |
| l2 | 5.23 | 3.41 | 0.65 | 1.44 | 1.09 | 0.11 | 12.10 | 20.11 | 8.01 | 88 | Example |
| m2 | 5.23 | 3.22 | 0.62 | 1.33 | 1.43 | 0.21 | 12.01 | 20.18 | 8.17 | 86 | Example |
| n2 | 5.50 | 3.23 | 0.59 | 1.39 | 1.09 | 0.12 | 12.04 | 20.21 | 8.17 | 86 | Example |
| o2 | 5.38 | 2.71 | 0.50 | 1.78 | 1.12 | 0.19 | 12.03 | 20.19 | 8.16 | 87 | Example |
| p2 | 5.31 | 2.87 | 0.54 | 1.59 | 1.31 | 0.04 | 12.11 | 20.17 | 8.06 | 79 | Example |
| q2 | 5.32 | 3.24 | 0.61 | 1.48 | 0.77 | 0.21 | 12.08 | 20.11 | 8.03 | 81 | Example |
| r2 | 5.11 | 3.31 | 0.65 | 1.41 | 0.79 | 0.09 | 12.09 | 20.19 | 8.10 | 78 | Example |
| s2 | 5.98 | 3.31 | 0.55 | 1.73 | 1.21 | 0.12 | 12.11 | 20.11 | 8.00 | 87 | Example |
| t2 | 5.21 | 3.19 | 0.61 | 1.39 | 1.02 | 0.31 | 12.03 | 20.31 | 8.28 | 82 | Example |
| u2 | 5.30 | 2.87 | 0.54 | 1.45 | 0.72 | 0.08 | 12.66 | 20.63 | 7.97 | 83 | Example |
| v2 | 5.32 | 3.11 | 0.58 | 1.22 | 0.89 | 0.12 | 12.63 | 20.65 | 8.02 | 84 | Example |
| w2 | 5.42 | 3.29 | 0.61 | 1.61 | 0.83 | 0.23 | 11.51 | 19.49 | 7.98 | 85 | Example |
| x2 | 5.12 | 3.12 | 0.61 | 1.43 | 0.91 | 0.41 | 14.89 | 24.89 | 10.00 | 39 | Comparative Example |
| y2 | 5.78 | 3.32 | 0.57 | 1.45 | 1.39 | 0.44 | 15.54 | 25.90 | 10.36 | 43 | Comparative Example |
| z2 | 5.24 | 3.66 | 0.70 | 1.91 | 1.13 | 0.32 | 14.98 | 25.04 | 10.06 | 45 | Comparative Example |
| aa2 | 5.63 | 3.69 | 0.66 | 1.32 | 0.82 | 0.12 | 15.39 | 25.56 | 10.17 | 47 | Comparative Example |
| ab2 | - | - | - | - | - | - | - | - | - | - | Comparative Example |
| ac2 | - | - | - | - | - | - | - | - | - | - | Comparative Example |
| ad2 | 5.11 | 3.29 | 0.64 | 1.78 | 1.12 | 0.31 | 14.89 | 26.11 | 11.22 | 44 | Comparative Example |
| ae2 | 5.12 | 3.49 | 0.68 | 1.87 | 1.21 | 0.44 | 14.32 | 25.78 | 11.46 | 47 | Comparative Example |
| af2 | 5.37 | 3.31 | 0.62 | 1.77 | 1.19 | 0.90 | 14.89 | 26.01 | 11.12 | 49 | Comparative Example |
| ag2 | 5.67 | 3.67 | 0.65 | 1.80 | 1.32 | 0.21 | 15.43 | 25.76 | 10.33 | 52 | Comparative Example |

In the steel sheets of Examples which were produced by the chemical components and the preferred production method according to the present disclosure, and which have an average crystal grain size of from 30 µm to 200 µm and a {111}<011> integration degree of from 2.00 to 8.00, the iron loss deterioration (Ws - Wn) was 8.50 W/kg or less, and the steel sheet had a favorable iron loss when a compressive stress is applied.

On the other hand, in the steel sheets of Comparative Examples in which the chemical components, the average crystal grain size, or the {111}<011> integration degree is outside the range of the present disclosure, the iron loss deterioration (Ws - Wn) was more than 8.50 W/kg, and the steel sheet had a higher iron loss when a compressive stress is applied, as compared to that of Examples.

In each of Nos. a20 and a23 in Table 2-2, as well as Nos. ab2 and ac2 in Table 5-2, cracks occurred in the first cold rolling, and the measurement of the steel sheet properties were not performed.

The disclosure of Japanese Patent Application No. 2022-057541 filed on March 30, 2022, and the disclosure of Japanese Patent Application No. 2022-132805 filed on August 23, 2022 are incorporated herein by reference in their entirety. All publications, patent applications, and technical standards mentioned in the present specification are incorporated herein by reference to the same extent as if each individual publication, patent application, or technical standard was specifically and individually indicated to be incorporated by reference.

## Claims

1. non-oriented electrical steel sheet, having a chemical composition consisting of, in terms of % by mass:
0.006% or less of C,
from 1.0% to 5.0% of Si,
less than 2.5% of sol. Al,
3.0% or less of Mn,
0.30% or less of P,
0.010% or less of S,
0.010% or less of N,
0.10% or less of O,
from 0 to 0.20% of Sn,
from 0 to 0.20% of Sb,
from 0 to 0.01% of Ca,
from 0 to 5.0% of Cr,
from 0 to 5.0% of Ni,
from 0 to 5.0% of Cu,
from 0 to 0.10% of Ce,
from 0 to 0.10% of B,
from 0 to 0.10% of Mg,
from 0 to 0.10% of Ti,
from 0 to 0.10% of V,
from 0 to 0.10% of Zr,
from 0 to 0.10% of Nd,
from 0 to 0.10% of Bi,
from 0 to 0.10% of W,
from 0 to 0.10% of Mo,
from 0 to 0.10% of Nb,
from 0 to 0.10% of Y, and
a balance consisting of Fe and impurities, wherein:
the non-oriented electrical steel sheet has an average crystal grain size of from 30 µm to 200 µm, and
the non-oriented electrical steel sheet has a {111}<011> integration degree of from 2.00 to 8.00, at a position corresponding to 1/4 of a sheet thickness in a sheet thickness direction from a surface of the steel sheet.

2. The non-oriented electrical steel sheet according to claim 1, wherein the non-oriented electrical steel sheet comprises, in terms of % by mass, one or more elements selected from the group consisting of:
from 0.0010% to 0.20% of Sn,
from 0.0010% to 0.20% of Sb,
from 0.0003% to 0.01% of Ca,
from 0.0010% to 5.0% of Cr,
from 0.0010% to 5.0% of Ni,
from 0.0010% to 5.0% of Cu,
from 0.001% to 0.10% of Ce,
from 0.0001% to 0.10% of B,
from 0.0001% to 0.10% of Mg,
from 0.0001% to 0.10% of Ti,
from 0.0001% to 0.10% of V,
from 0.0002% to 0.10% of Zr,
from 0.002% to 0.10% of Nd,
from 0.002% to 0.10% of Bi,
from 0.002% to 0.10% of W,
from 0.002% to 0.10% of Mo,
from 0.0001% to 0.10% of Nb, and
from 0.002% to 0.10% of Y

3. The non-oriented electrical steel sheet according to claim 1 or claim 2, wherein the non-oriented electrical steel sheet has a {110}<001> integration degree of 1.00 or more, at a position corresponding to 1/4 of the sheet thickness in the sheet thickness direction from the surface of the steel sheet.

4. The non-oriented electrical steel sheet according to any one of claims 1 to 3, wherein a value of a ratio of {111}<112> integration degree / {111}<011> integration degree is 1.00 or less, at a position corresponding to 1/4 of the sheet thickness in the sheet thickness direction from the surface of the steel sheet.

5. The non-oriented electrical steel sheet according to any one of claims 1 to 4, wherein the non-oriented electrical steel sheet has a {411}<148> integration degree of 2.00 or less, at a position corresponding to 1/4 of the sheet thickness in the sheet thickness direction from the surface of the steel sheet.

6. The non-oriented electrical steel sheet according to any one of claims 1 to 5, wherein the non-oriented electrical steel sheet has a {411}<011> integration degree of 2.00 or less, at a position corresponding to 1/4 of the sheet thickness in the sheet thickness direction from the surface of the steel sheet.

7. The non-oriented electrical steel sheet according to any one of claims 1 to 6, wherein the sheet thickness of the non-oriented electrical steel sheet is from 0.10 mm to 0.35 mm.

8. A motor core having a structure in which a plurality of the non-oriented electrical steel sheets according to any one of claims 1 to 7 are stacked one on another in layers.
